# EUROPEAN PATENT APPLICATION

(11) **EP 4 674 742 A1**
(43) Date of publication of application: **07.01.2026**
(21) Application number: 23930745.7
(22) Date of filing: 08.09.2023
(51) Int. Cl.: B62K 11/04, B62M 7/02, B62K 19/24

(54) **ELECTRIC SADDLE RIDING TYPE VEHICLE**

(30) Priority: 24.03.2023 JP 2023048101
(71) Applicant: Yamaha Hatsudoki Kabushiki Kaisha, Iwata-shi, Shizuoka 438-8501 (JP)
(72) Inventor: EBIHARA, Yuya, Iwata-shi, Shizuoka 438-8501 (JP); MIYASHIRO, Shidehiko, Iwata-shi, Shizuoka 438-8501 (JP)
(74) Representative: Grünecker Patent- und Rechtsanwälte PartG mbB
(86) International application number: PCT/JP2023/032849
(87) International publication number: WO 2024/202113

(57) **Abstract**

A straddled electric vehicle 1 includes a main frame 5, a down frame 6, a power unit 51, and a connecting member 13. The main frame 5 extends in a longitudinal direction X. The down frame 6 is disposed below the main frame 5 in vehicle side view. The power unit 51 is disposed below the main frame 5 and above the down frame 6 in vehicle side view. The connecting member 13 is connected to the main frame 5 and the down frame 6. The connecting member 13 overlaps the power unit 51 in vehicle side view. The connecting member 13 is detachable from the main frame 5 and the down frame 6.

## Description

### Technical Field

The present invention relates to a straddled electric vehicle.

### Background Art

Patent Literature 1 discloses a straddled electric vehicle. The straddled electric vehicle includes right and left front frame units. Each front frame unit includes a main frame, a down frame, and a connecting member. The down frame is disposed below the main frame. The connecting member is connected to the main frame and the down frame.

The straddled electric vehicle includes a battery and a power unit. The battery is disposed between the right and left front frame units. The power unit is disposed below the right and left front frame units. Therefore, the down frame is disposed higher than the power unit. The connecting member is disposed higher than the power unit. The connecting member does not overlap the power unit in side view of the straddled electric vehicle.

### Citation List

### Patent Literature

Patent Literature 1: WO 2014/054204 A

### Summary of Invention

### Technical Problem

The power unit is disposed lower than the right and left front frame units. Therefore, it is difficult for the right and left front frame units to firmly support the power unit.

The present invention has been made in view of such circumstances, and an object thereof is to provide a straddled electric vehicle firmly supporting a power unit. Solution to Problem

First, it has been studied to dispose the power unit above the down frame. Specifically, it has been considered to extend the down frame to a position below the power unit. According to this, the power unit is firmly supported.

However, a first problem arises when the power unit is disposed above the down frame. The first problem is, for example, a decrease in rigidity of the main frame and the down frame. The first problem is, for example, a decrease in rigidity in the lower portion of the down frame.

Therefore, it has been studied to further lower the position of the connecting member. Specifically, it has been studied to dispose the connecting member at a position overlapping the power unit in side view of the straddled electric vehicle. When the connecting member overlaps the power unit in side view of the straddled electric vehicle, the connecting member appropriately reinforces the main frame and the down frame. Therefore, the first problem is solved.

However, a second problem arises when the power unit is disposed above the down frame and the connecting member overlaps the power unit in side view of the straddled electric vehicle. The second problem is that it is difficult to attach and detach the power unit to and from the straddled electric vehicle. The second problem is that the power unit interferes with at least one of the main frame, the down frame, and the connecting member when the power unit is attached to and detached from the straddled electric vehicle.

Therefore, the configuration of the straddled electric vehicle has been further studied. The present invention is based on these studies. The present invention has the following configuration. That is, the present invention is a straddled electric vehicle including:
a main frame extending in a longitudinal direction of the straddled electric vehicle;
a down frame disposed below the main frame in side view of the straddled electric vehicle;
a power unit below the main frame and above the down frame in the side view of the straddled electric vehicle; and
a first connecting member connected to the main frame and the down frame, in which
the first connecting member overlaps the power unit in the side view of the straddled electric vehicle, and
the first connecting member is detachable from the main frame and the down frame.

The straddled electric vehicle includes a main frame, a down frame, and a power unit. The main frame extends in a longitudinal direction of the straddled electric vehicle. The down frame is disposed below the main frame in side view of the straddled electric vehicle. The power unit is disposed below the main frame and above the down frame in side view of the straddled electric vehicle. Therefore, the power unit is firmly supported.

The straddled electric vehicle includes a first connecting member. The first connecting member is connected to the main frame and the down frame. The first connecting member overlaps the power unit in side view of the straddled electric vehicle. Therefore, the first connecting member appropriately reinforces the main frame and the down frame. Thus, the main frame and the down frame have appropriate rigidity.

The first connecting member is detachable from the main frame and the down frame. When the first connecting member is detached from the main frame and the down frame, the first connecting member does not overlap the power unit in side view of the straddled electric vehicle. Therefore, when the first connecting member is detached from the main frame and the down frame, the power unit is attached to and detached from the straddled electric vehicle without the power unit interfering with the first connecting member. Thus, the power unit is easily attached to and detached from the straddled electric vehicle.

As described above, the present straddled electric vehicle firmly supports the power unit. The present straddled electric vehicle provides appropriate rigidity to the main frame and the down frame. The present straddled electric vehicle allows the power unit to be easily attached to and detached from the present straddled electric vehicle.

In the straddled electric vehicle described above, it is preferred that
when the first connecting member is detached from the main frame and the down frame, the first connecting member allows the power unit to move in a transverse direction of the straddled electric vehicle with respect to the main frame and the down frame.

Therefore, when the first connecting member is detached from the main frame and the down frame, it is easy for the power unit to move in the transverse direction of the straddled electric vehicle with respect to the main frame and the down frame. The power unit is attached to and detached from the straddled electric vehicle by moving the power unit in the transverse direction of the straddled electric vehicle with respect to the main frame and the down frame. Thus, when the first connecting member is detached from the main frame and the down frame, the power unit is more easily attached to and detached from the straddled electric vehicle.

In the straddled electric vehicle described above, it is preferred that
the straddled electric vehicle includes
a first fastening member that attaches and detaches the main frame and the first connecting member, and
a second fastening member that attaches and detaches the down frame and the first connecting member.

Therefore, it is easy to attach the first connecting member to the main frame and the down frame. It is easy to detach the first connecting member from the main frame and the down frame.

In the straddled electric vehicle described above, it is preferred that
the main frame and the down frame surround the power unit in the side view of the straddled electric vehicle.

Even when the main frame and the down frame surround the power unit in side view of the straddled electric vehicle, the power unit is easily attached to and detached from the straddled electric vehicle. This is because the first connecting member is detachable from the main frame and the down frame. Rather, when the main frame and the down frame surround the power unit in side view of the straddled electric vehicle, the first connecting member is detachable from the main frame and the down frame, which is very useful. When the main frame and the down frame surround the power unit in side view of the straddled electric vehicle, the first connecting member is very useful for attaching and detaching the power unit to and from the straddled electric vehicle.

In the straddled electric vehicle described above, it is preferred that
the down frame has
   a front portion, and
   a lower portion,
the front portion passes through a position in front of the power unit and extends from a position higher than the power unit to a position lower than the power unit,
the lower portion extends rearward from the front portion, and
the power unit is disposed above the lower portion.

Therefore, the power unit is suitably disposed above the down frame.

In the straddled electric vehicle described above, it is preferred that
the power unit includes
an inverter, and
an electric motor.

Therefore, the power unit suitably generates mechanical energy for propulsion of the straddled electric vehicle from electric energy.

In the straddled electric vehicle described above, it is preferred that
the first connecting member overlaps the inverter in the side view of the straddled electric vehicle.

The first connecting member suitably overlaps the power unit in side view of the straddled electric vehicle.

In the straddled electric vehicle described above, it is preferred that
the first connecting member supports the power unit.

The power unit is more firmly supported.

In the straddled electric vehicle described above, it is preferred that
the first connecting member includes
   a first site connected to the main frame,
   a second site connected to the down frame, and
   a third site connected to the power unit, and
   the third site is disposed between the first site and the second site.

The third site is disposed between the first site and the second site. Therefore, the third site has appropriate rigidity. Thus, the first connecting member suitably supports the power unit.

In the straddled electric vehicle described above, it is preferred that
the first connecting member passes through the third site and extends from the first site to the second site.

Therefore, the third site has more appropriate rigidity. Thus, the first connecting member more suitably supports the power unit.

In the straddled electric vehicle described above, it is preferred that
the first connecting member is disposed at one of a position rightward of the power unit and a position leftward of the power unit.

The first connecting member suitably overlaps the power unit in side view of the straddled electric vehicle.

In the straddled electric vehicle described above, it is preferred that
the straddled electric vehicle comprises a second connecting member connected to the main frame and the down frame,
the second connecting member is disposed at the other of the position rightward of the power unit and the position leftward of the power unit, and
the second connecting member overlaps the power unit in the side view of the straddled electric vehicle.

Therefore, the second connecting member appropriately reinforces the main frame and the down frame. Thus, the main frame and the down frame have more appropriate rigidity.

In the straddled electric vehicle described above, it is preferred that
the second connecting member is detachable from the main frame and the down frame.

When the second connecting member is detached from the main frame and the down frame, the second connecting member does not overlap the power unit in side view of the straddled electric vehicle. Therefore, when the second connecting member is detached from the main frame and the down frame, the power unit is attached to and detached from the straddled electric vehicle without the power unit interfering with the second connecting member. Thus, the power unit is more easily attached to and detached from the straddled electric vehicle.

In the straddled electric vehicle described above, it is preferred that
the straddled electric vehicle comprises a battery, and
the first connecting member overlaps the battery in the side view of the straddled electric vehicle.

Therefore, the first connecting member suitably protects the battery.

In the straddled electric vehicle described above, it is preferred that
the battery is disposed above the power unit, and
the main frame includes
   a right main frame disposed rightward of the battery, and
   a left main frame disposed leftward of the battery.

The main frame includes a right main frame and a left main frame. The right main frame is disposed rightward of the battery. The left main frame is disposed leftward of the battery. When the right main frame is disposed rightward of the battery and the left main frame is disposed leftward of the battery, the separation distance between the right main frame and the left main frame in the transverse direction of the straddled electric vehicle is relatively large. However, even when the right main frame is disposed rightward of the battery and the left main frame is disposed leftward of the battery, the main frame has appropriate rigidity. This is because the first connecting member is connected to the main frame and the down frame, and the first connecting member overlaps the power unit in side view of the straddled electric vehicle. Rather, when the right main frame is disposed rightward of the battery and the left main frame is disposed leftward of the battery, the first connecting member is very useful. When the right main frame is disposed rightward of the battery and the left main frame is disposed leftward of the battery, the first connecting member is very useful for reinforcing the main frame.

In the straddled electric vehicle described above, it is preferred that
the battery is attached to and detached from the straddled electric vehicle by moving the battery in the up-down direction of the straddled electric vehicle with respect to the main frame.

Therefore, the moving direction of the battery when the battery is attached to and detached from the straddled electric vehicle is the up-down direction of the straddled electric vehicle. As described above, the power unit is attached to and detached from the straddled electric vehicle by moving the power unit in the transverse direction of the straddled electric vehicle with respect to the main frame and the down frame. That is, the moving direction of the power unit when the power unit is attached to and detached from the straddled electric vehicle is the transverse direction of the straddled electric vehicle. Therefore, the moving direction of the power unit when the power unit is attached to and detached from the straddled electric vehicle is different from the moving direction of the battery when the battery is attached to and detached from the straddled electric vehicle. Thus, the power unit is attached to and detached from the straddled electric vehicle without the power unit interfering with the battery. Therefore, the power unit is more easily attached to and detached from the straddled electric vehicle. Similarly, the battery is attached to and detached from the straddled electric vehicle without the battery interfering with the power unit. Therefore, the battery is easily attached to and detached from the straddled electric vehicle.

### Advantageous Effects of Invention

The present straddled electric vehicle firmly supports the power unit.

### Brief Description of Drawings

FIG. 1 is a left side view of a straddled electric vehicle according to an embodiment.
FIG. 2 is a perspective view of a vehicle body frame.
FIG. 3 is a left side view of the vehicle body frame, a battery, and a power unit.
FIG. 4 is a right side view of the vehicle body frame, the battery, and the power unit.
FIG. 5 is a plan view of the vehicle body frame, the battery, and the power unit.
FIG. 6 is a bottom view of the vehicle body frame, the battery, and the power unit.
FIG. 7 is a front view of the vehicle body frame, the battery, and the power unit.
FIG. 8 is a left side view of the vehicle body frame, the battery, and the power unit.
FIG. 9 is a right side view of the vehicle body frame, the battery, and the power unit.
FIG. 10 is a plan view of the vehicle body frame and the power unit.
FIG. 11 is a plan view for explaining a procedure for attaching and detaching a power unit to and from a straddled electric vehicle.
FIG. 12 is a front view for explaining a procedure for attaching and detaching a battery and a power unit to and from a straddled electric vehicle.

### Description of Embodiments

Hereinafter, a straddled electric vehicle 1 according to the present invention will be described with reference to the drawings.

### <1. Schematic configuration of straddled electric vehicle 1>

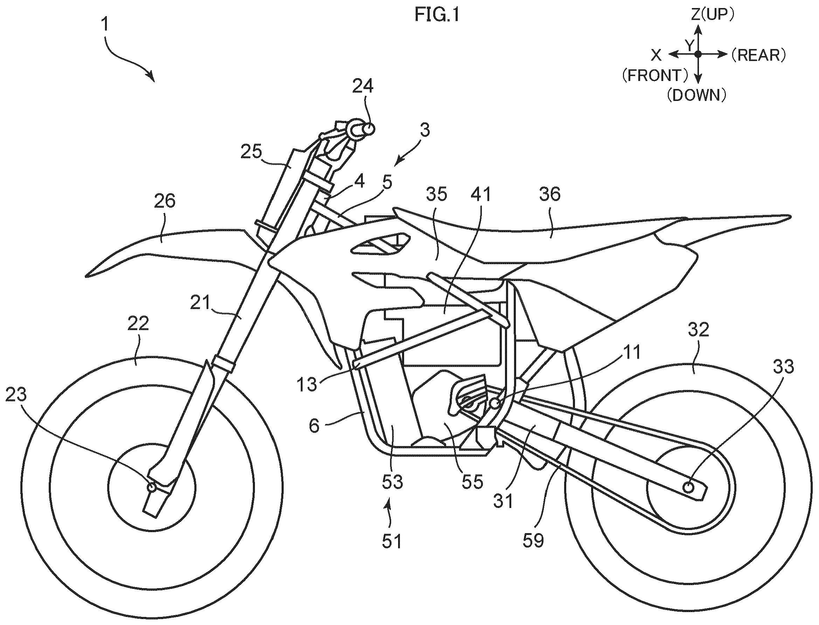

FIG. 1 is a left side view of a straddled electric vehicle 1 according to an embodiment.

FIG. 1 illustrates a longitudinal direction X, a transverse direction Y, and an up-down direction Z of the straddled electric vehicle 1. The longitudinal direction X, the transverse direction Y, and the up-down direction Z are defined with reference to a driver (also referred to as a rider) mounted on the straddled electric vehicle 1. The longitudinal direction X, the transverse direction Y, and the up-down direction Z are orthogonal to each other. The longitudinal direction X and the transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled electric vehicle 1. Unless otherwise stated in this specification, "forward" and "rearward" include not only directions parallel to the longitudinal direction X but also directions close to the longitudinal direction X. The directions close to the longitudinal direction X are, for example, directions at angles of 45 degrees or less to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

In the present specification, each expression describing the arrangement has the following meaning. Hereinafter, the transverse direction Y will be described as an example, but the same applies to the longitudinal direction X and the up-down direction Z.

The expression "Member Ma is disposed more rightward/leftward than member Mb" defines a position of member Ma with respect to member Mb in the transverse direction Y, and does not define a position of member Ma with respect to member Mb in the longitudinal direction X and the up-down direction Z. In this expression, member Ma may or may not overlap member Mb in side view of the straddled electric vehicle 1.

The expression "Member Ma is disposed rightward/leftward of the member Mb" without reference to a looking direction defines a position of member Ma with respect to member Mb in the transverse direction Y, a position of member Ma with respect to member Mb in the longitudinal direction X, and a position of member Ma with respect to member Mb in the up-down direction Z. This expression means that member Ma is disposed more rightward/leftward than member Mb, and at least a part of member Ma overlaps at least a part of member Mb in side view of the straddled electric vehicle 1.

The expression "Member Ma is disposed rightward/leftward of member Mb in plan view of the straddled electric vehicle 1" defines a position of member Ma with respect to member Mb in the transverse direction Y and a position of member Ma with respect to member Mb in the longitudinal direction X, and does not define a position of member Ma with respect to member Mb in the up-down direction Z. This expression means that member Ma is disposed more rightward/leftward than member Mb, the front end of member Ma is located more forward than the rear end of member Mb, and the rear end of member Ma is located more rearward than the front end of member Mb.

The expression "Member Ma is disposed rightward/leftward of member Mb in front view of the straddled electric vehicle 1" defines a position of member Ma with respect to member Mb in the transverse direction Y and a position of member Ma with respect to member Mb in the up-down direction Z, and does not define a position of member Ma with respect to member Mb in the longitudinal direction X. This expression means that member Ma is disposed more rightward/leftward than member Mb, the upper end of member Ma is located higher than the lower end of member Mb, and the lower end of member Ma is located lower than the upper end of member Mb.

In the present specification, "in side view of the straddled electric vehicle 1" is appropriately referred to as "in vehicle side view". Similarly, "in plan view of the straddled electric vehicle 1" is appropriately referred to as "in vehicle plan view". "In bottom view of the straddled electric vehicle 1" is appropriately referred to as "in vehicle bottom view". "In front view of the straddled electric vehicle 1" is appropriately referred to as "in vehicle front view". "In rear view of the straddled electric vehicle 1" is appropriately referred to as "in vehicle rear view".

The straddled electric vehicle 1 is classified as, for example, an off-road type vehicle. The off-road type vehicle is suitable for traveling on an uneven ground, for example. The off-road type vehicle includes, for example, a motocrosser and a dual purpose vehicle. The dual purpose vehicle is also referred to as a dual-sport motorcycle.

The straddled electric vehicle 1 includes a vehicle body frame 3, a front fork 21, and a front wheel 22. The front fork 21 is supported by the vehicle body frame 3. The front fork 21 is rotatable with respect to the vehicle body frame 3. The front fork 21 extends forward and downward from the vehicle body frame 3. The front wheel 22 is supported by the front fork 21. The front wheel 22 is supported by a lower part of the front fork 21. The front wheel 22 is disposed in front of the vehicle body frame 3.

The straddled electric vehicle 1 includes a front axle 23. The front axle 23 is supported by the lower part of the front fork 21. The front axle 23 extends in the transverse direction Y. The front wheel 22 is supported by the front axle 23. The front wheel 22 is rotatable about the front axle 23.

The straddled electric vehicle 1 includes a handlebar 24, a number plate 25, and a front fender 26. The handlebar 24, the number plate 25, and the front fender 26 are each supported by the front fork 21. The handlebar 24 is supported by an upper part of the front fork 21. The number plate 25 is disposed lower than the handlebar 24. The number plate 25 is disposed in front of the front fork 21. The front fender 26 is disposed below the number plate 25. The front fender 26 is disposed above the front wheel 22. The front fender 26 extends in the longitudinal direction X. The front fender 26 extends from a position in front of the front fork 21 to a position behind the front fork 21.

The straddled electric vehicle 1 includes a swing arm 31 and a rear wheel 32. The swing arm 31 is supported by the vehicle body frame 3. The swing arm 31 is swingable with respect to the vehicle body frame 3. The swing arm 31 extends rearward from the vehicle body frame 3. The rear wheel 32 is supported by the swing arm 31. The rear wheel 32 is supported by a rear part of the swing arm 31. The rear wheel 32 is disposed behind the vehicle body frame 3.

The straddled electric vehicle 1 includes a rear axle 33. The rear axle 33 is supported by the rear part of the swing arm 31. The rear axle 33 extends in the transverse direction Y. The rear wheel 32 is supported by the rear axle 33. The rear wheel 32 is rotatable about the rear axle 33.

The straddled electric vehicle 1 includes a side cover 35 and a seat 36. The side cover 35 and the seat 36 are supported by the vehicle body frame 3. The side cover 35 is disposed on the sides of the vehicle body frame 3. The side cover 35 is disposed rightward of the vehicle body frame 3. The side cover 35 is disposed leftward of the vehicle body frame 3. The side cover 35 overlaps a part of the vehicle body frame 3 in vehicle side view. The seat 36 is disposed behind the side cover 35. The seat 36 is disposed more rearward than the handlebar 24.

The straddled electric vehicle 1 includes a battery 41 and a power unit 51. The battery 41 and the power unit 51 are each disposed behind the front wheel 22. The battery 41 and the power unit 51 are each disposed in front of the rear wheel 32. The battery 41 does not overlap the rear wheel 32 in vehicle side view. The power unit 51 does not overlap the rear wheel 32 in vehicle side view.

The power unit 51 is disposed below the battery 41. In other words, the battery 41 is disposed above the power unit 51. The power unit 51 does not substantially overlap the battery 41 in vehicle side view.

The battery 41 and the power unit 51 are supported by the vehicle body frame 3. When the battery 41 and the power unit 51 are supported by the vehicle body frame 3, the battery 41 and the power unit 51 are each fixed to the vehicle body frame 3. For example, when the battery 41 is supported by the vehicle body frame 3, the battery 41 cannot swing with respect to the vehicle body frame 3. For example, when the power unit 51 is supported by the vehicle body frame 3, the power unit 51 cannot swing with respect to the vehicle body frame 3.

The battery 41 stores electric energy. The battery 41 supplies electric energy to the power unit 51. The battery 41 is, for example, a rechargeable secondary battery. The battery 41 is, for example, a lithium ion battery.

The power unit 51 converts the electric energy into mechanical energy for propulsion of the straddled electric vehicle 1. The power unit 51 includes an inverter 53 and an electric motor 55. The inverter 53 is electrically connected to the battery 41 and the electric motor 55. The inverter 53 receives a direct current from the battery 41. The inverter 53 converts the direct current into an alternating current. The inverter 53 supplies the alternating current to the electric motor 55. The electric motor 55 is disposed behind the inverter 53. The electric motor 55 generates rotational power from an alternating current. The rotational power of the electric motor 55 is used to drive the rear wheel 32. That is, the electric motor 55 drives the rear wheel 32. The electric motor 55 is for propelling the straddled electric vehicle 1. The electric motor 55 is, for example, an AC motor.

For example, the battery 41 includes a battery main body and a battery case that houses the battery main body. For example, the power unit 51 includes a housing that houses the inverter 53 and the electric motor 55. The battery case and the housing are separated from each other. The battery case and the housing are not in contact with each other.

For example, the housing is divided into a first housing that houses the inverter 53 and a second housing that houses the electric motor 55. The first housing and the second housing are in contact with each other. The first housing and the second housing are connected to each other. Here, the first housing and the second housing may be separable from each other. Alternatively, the first housing and the second housing may be inseparable from each other. The first housing and the second housing may be integrated.

The straddled electric vehicle 1 further includes a power transmission mechanism 59. The power transmission mechanism 59 is connected to the power unit 51. Specifically, the power transmission mechanism 59 is connected to the electric motor 55. The power transmission mechanism 59 is further connected to the rear wheel 32. The power transmission mechanism 59 transmits the power of the power unit 51 to the rear wheel 32. The power transmission mechanism 59 includes, for example, a chain. Alternatively, the power transmission mechanism 59 may include, for example, either a belt or a drive shaft.

A driver of the straddled electric vehicle 1 sits on the seat 36 and grips the handlebar 24.

### <2. Configuration of vehicle body frame 3>

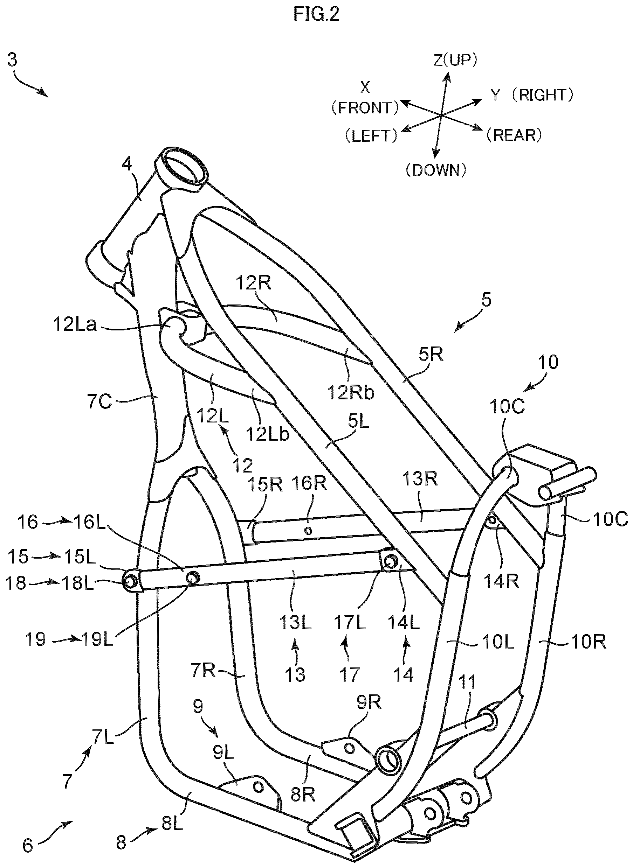

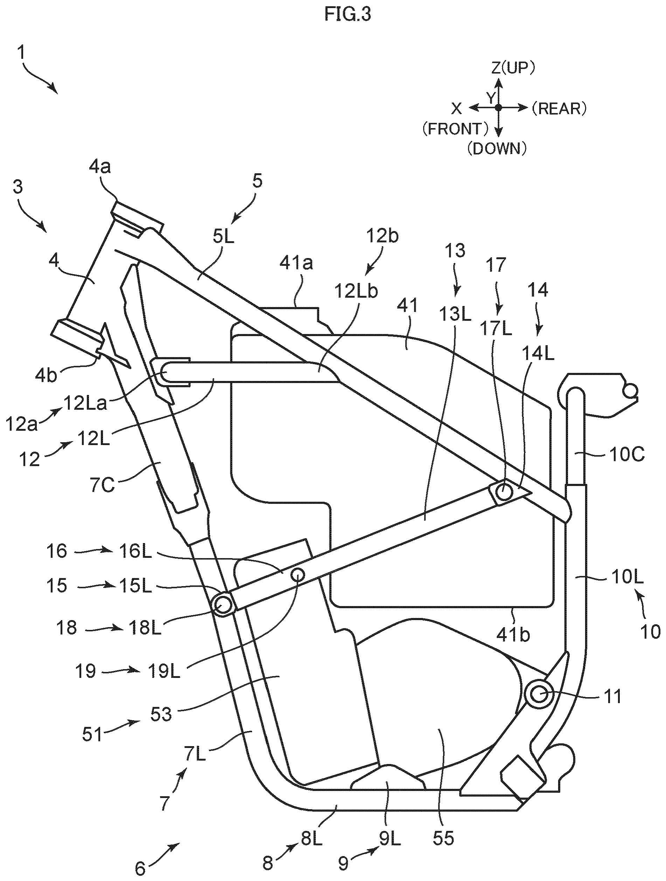

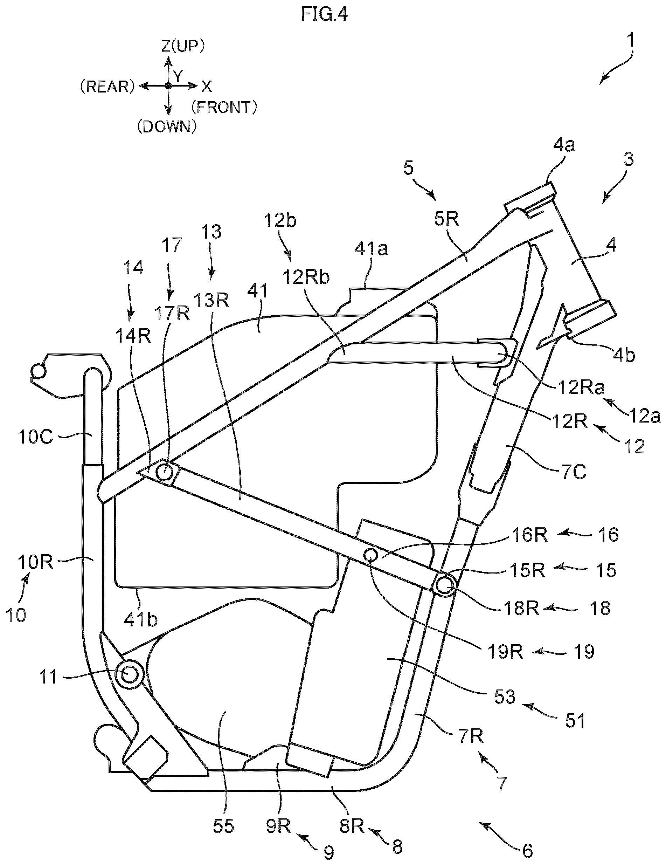

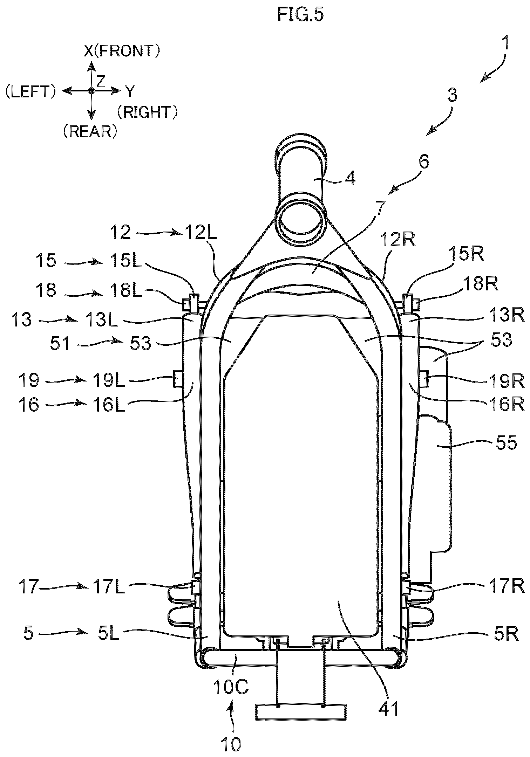

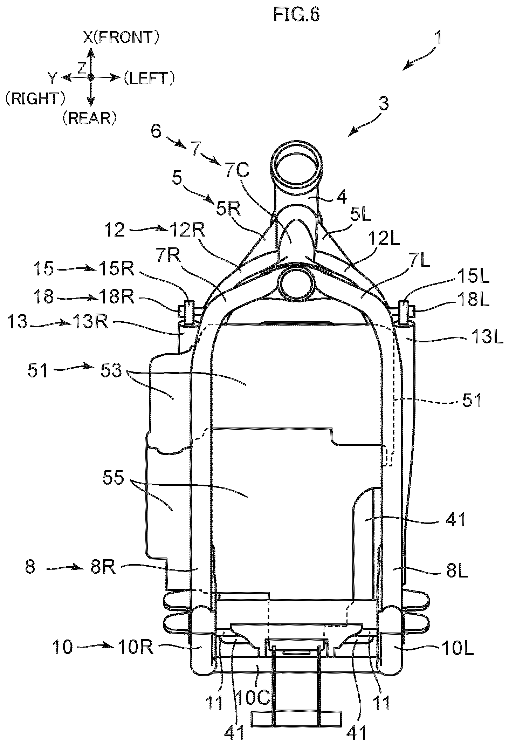

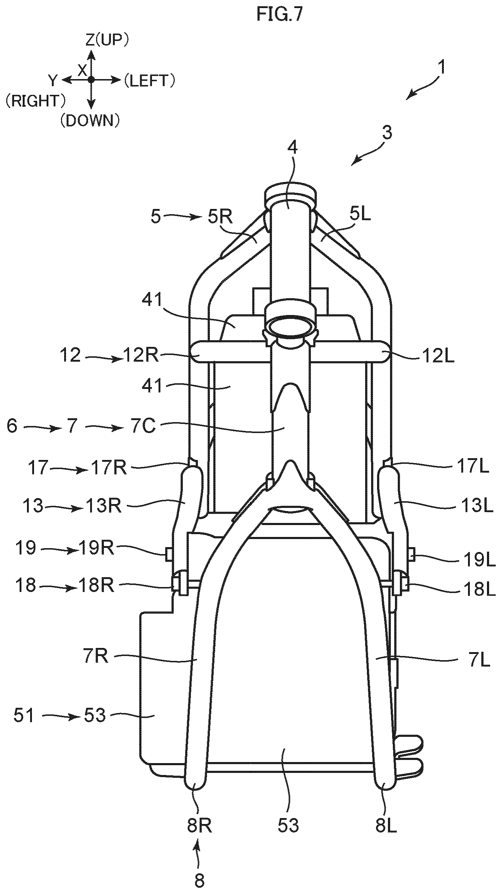

FIG. 2 is a perspective view of the vehicle body frame 3. FIG. 3 is a left side view of the vehicle body frame 3, the battery 41, and the power unit 51. FIG. 4 is a right side view of the vehicle body frame 3, the battery 41, and the power unit 51. FIG. 5 is a plan view of the vehicle body frame 3, the battery 41, and the power unit 51. FIG. 6 is a bottom view of the vehicle body frame 3, the battery 41, and the power unit 51. FIG. 7 is a front view of the vehicle body frame 3, the battery 41, and the power unit 5 1.

The vehicle body frame 3 includes a head pipe 4. The head pipe 4 is located at a front part of the vehicle body frame 3. The head pipe 4 extends forward and downward. The head pipe 4 supports the front fork 21. The front fork 21 rotates around the head pipe 4. The head pipe 4 is disposed behind the number plate 25.

The vehicle body frame 3 includes a main frame 5. The main frame 5 extends in the longitudinal direction X. The main frame 5 has a front end and a rear end. The front end of the main frame 5 is connected to the head pipe 4. The main frame 5 extends rearward from the head pipe 4. The main frame 5 extends downward and rearward from the head pipe 4.

The main frame 5 includes a right main frame 5R and a left main frame 5L. The left main frame 5L is disposed leftward of the right main frame 5R. Each of the right main frame 5R and the left main frame 5L is connected to the head pipe 4. The right main frame 5R extends rightward and rearward from the head pipe 4. The left main frame 5L extends leftward and rearward from the head pipe 4.

The vehicle body frame 3 includes a down frame 6. The down frame 6 is disposed below the main frame 5 in vehicle side view. The down frame 6 extends in the longitudinal direction X. The down frame 6 has a front end and a rear end. The front end of the down frame 6 is connected to the head pipe 4. The down frame 6 extends downward from the head pipe 4. Then, the down frame 6 extends rearward. The down frame 6 is disposed behind the front fork 21 in vehicle side view.

The down frame 6 includes a front portion 7 and a lower portion 8. The front portion 7 is connected to the head pipe 4. The front portion 7 extends downward from the head pipe 4. The lower portion 8 is disposed below the front portion 7. The lower portion 8 is connected to the front portion 7. The lower portion 8 is connected to the lower part of the front portion 7. The lower portion 8 extends rearward from the front portion 7.

Refer to FIGS. 2 and 7. The front portion 7 includes a central front portion 7C, a right front portion 7R, and a left front portion 7L. The central front portion 7C is connected to the head pipe 4. The central front portion 7C extends downward from the head pipe 4. The right front portion 7R and the left front portion 7L are each disposed below the central front portion 7C. The left front portion 7L is disposed leftward of the right front portion 7R. Each of the right front portion 7R and the left front portion 7L is connected to the central front portion 7C. The right front portion 7R extends rightward and downward from the central front portion 7C. The left front portion 7L extends leftward and downward from the central front portion 7C.

Refer to FIGS. 2 and 6. The lower portion 8 includes a right lower portion 8R and a left lower portion 8L. The right lower portion 8R is connected to the right front portion 7R. The right lower portion 8R extends rearward from the right front portion 7R. The left lower portion 8L is disposed leftward of the right lower portion 8R. The left lower portion 8L is connected to the left front portion 7L. The left lower portion 8L extends rearward from the left front portion 7L.

Refer to FIGS. 2 to 4. The vehicle body frame 3 includes a bracket 9. The bracket 9 is attached to the down frame 6. The bracket 9 is attached to the lower portion 8. The bracket 9 is disposed more rearward than the front portion 7.

The bracket 9 includes a right bracket 9R and a left bracket 9L. The right bracket 9R is attached to the right lower portion 8R. The left bracket 9L is disposed leftward of the right bracket 9R. The left bracket 9L is attached to the left lower portion 8L.

The vehicle body frame 3 includes a pivot frame 10. The pivot frame 10 is connected to the main frame 5 and the down frame 6. The pivot frame 10 is connected to the rear end of the main frame 5 and the rear end of the down frame 6. The pivot frame 10 extends in the up-down direction Z in vehicle side view.

The pivot frame 10 includes a right pivot frame 10R, a left pivot frame 10L, and a central pivot frame 10C. The right pivot frame 10R is connected to the right main frame 5R and the right lower portion 8R. The left pivot frame 10L is disposed leftward of the right pivot frame 10R. The left pivot frame 10L is connected to the left main frame 5L and the left lower portion 8L. Each of the right pivot frame 10R and the left pivot frame 10L extends in the up-down direction Z. The central pivot frame 10C is connected to the right pivot frame 10R and the left pivot frame 10L. The central pivot frame 10C is connected to the upper part of the right pivot frame 10R and the upper part of the left pivot frame 10L. The central pivot frame 10C extends in the transverse direction Y.

The vehicle body frame 3 includes a pivot shaft portion 11. The pivot shaft portion 11 is connected to the pivot frame 10. The pivot shaft portion 11 is connected to a right pivot frame 10R and a left pivot frame 10L. The pivot shaft portion 11 extends in the transverse direction Y.

The pivot shaft portion 11 is disposed lower than the main frame 5. The pivot shaft portion 11 is disposed lower than the central pivot frame 10C. The pivot shaft portion 11 is disposed higher than the lower portion 8. The pivot shaft portion 11 is disposed more rearward than the bracket 9. The pivot shaft portion 11 is disposed higher than the bracket 9.

The pivot shaft portion 11 supports the swing arm 31. The swing arm 31 swings around the pivot shaft portion 11.

The vehicle body frame 3 includes a reinforcing frame 12. The reinforcing frame 12 is disposed more rearward than the head pipe 4. The reinforcing frame 12 is disposed higher than the bracket 9. The reinforcing frame 12 is disposed more forward than the pivot frame 10. The reinforcing frame 12 is disposed higher than the pivot shaft portion 11. The reinforcing frame 12 is connected to the main frame 5 and the down frame 6. The reinforcing frame 12 extends rearward from the down frame 6. The reinforcing frame 12 does not have a portion located in front of the down frame 6 in vehicle side view. The reinforcing frame 12 reinforces the main frame 5 and the down frame 6. The reinforcing frame 12 is, for example, a tension pipe.

Refer to FIGS. 2 to 4 and 7. The reinforcing frame 12 includes a right reinforcing frame 12R and a left reinforcing frame 12L. The left reinforcing frame 12L is disposed leftward of the right reinforcing frame 12R. Each of the right reinforcing frame 12R and the left reinforcing frame 12L is connected to the main frame 5 and the down frame 6. Each of the right reinforcing frame 12R and the left reinforcing frame 12L extends rearward from the down frame 6 in vehicle side view. The right reinforcing frame 12R does not have a portion located in front of the down frame 6 in vehicle side view. The left reinforcing frame 12L does not have a portion located in front of the down frame 6 in vehicle side view.

Specifically, the right reinforcing frame 12R is connected to the right main frame 5R and the down frame 6. The right reinforcing frame 12R extends rightward and rearward from the down frame 6. The left reinforcing frame 12L is connected to the left main frame 5L and the down frame 6. The left reinforcing frame 12L extends leftward and rearward from the down frame 6.

Each of the right reinforcing frame 12R and the left reinforcing frame 12L extends in a horizontal direction in vehicle side view. Each of the right reinforcing frame 12R and the left reinforcing frame 12L extends in a horizontal direction in vehicle front view. Each of the right reinforcing frame 12R and the left reinforcing frame 12L is curved. For example, each of the right reinforcing frame 12R and the left reinforcing frame 12L is curved in vehicle plan view. Each of the right reinforcing frame 12R and the left reinforcing frame 12L has a rod shape or a pipe shape.

The right reinforcing frame 12R has a front end 12Ra and a rear end 12Rb. The left reinforcing frame 12L has a front end 12La and a rear end 12Lb. Each of the front ends 12Ra and 12La is connected to the down frame 6. Each of the front ends 12Ra and 12La is connected to the front portion 7. Each of the front ends 12Ra and 12La is connected to the central front portion 7C. Each of the rear ends 12Rb and 12Lb is connected to the main frame 5. The rear end 12Rb is connected to the right main frame 5R. The rear end 12Lb is connected to the left main frame 5L.

The rear end 12Rb is located more rearward than and more rightward than the front end 12Ra. The rear end 12Rb is disposed at substantially the same height position as the front end 12Ra. The rear end 12Lb is located more rearward than and more leftward than the front end 12La. The rear end 12Lb is disposed at substantially the same height position as the front end 12La.

When the front ends 12Ra and 12La are not distinguished, they are referred to as "front end 12a". When the rear ends 12Rb and 12Lb are not distinguished, they are referred to as "rear end 12b".

Refer to FIGS. 2 to 7. The vehicle body frame 3 includes a connecting member 13. The connecting member 13 is disposed more rearward than the head pipe 4. The connecting member 13 is disposed higher than the bracket 9. The connecting member 13 is disposed more forward than the pivot frame 10. The connecting member 13 is disposed higher than the pivot shaft portion 11. The connecting member 13 is disposed lower than the reinforcing frame 12. The connecting member 13 is connected to the main frame 5 and the down frame 6. The connecting member 13 extends rearward from the down frame 6. The connecting member 13 reinforces the main frame 5 and the down frame 6. The connecting member 13 is, for example, a tension pipe.

The connecting member 13 includes a right connecting member 13R and a left connecting member 13L. The left connecting member 13L is disposed leftward of the right connecting member 13R. Each of the right connecting member 13R and the left connecting member 13L is connected to the main frame 5 and the down frame 6. Each of the right connecting member 13R and the left connecting member 13L extends rearward from the down frame 6. Each of the right connecting member 13R and the left connecting member 13L extends rearward and upward from the down frame 6.

Specifically, the right connecting member 13R is connected to the right main frame 5R and the down frame 6. The left connecting member 13L is connected to the left main frame 5L and the down frame 6.

Each of the right connecting member 13R and the left connecting member 13L extends linearly in vehicle side view. Strictly speaking, each of the right connecting member 13R and the left connecting member 13L is curved. For example, each of the right connecting member 13R and the left connecting member 13L is slightly curved in vehicle plan view. Each of the right connecting member 13R and the left connecting member 13L is slightly curved in vehicle front view. Each of the right connecting member 13R and the left connecting member 13L has a rod shape or a pipe shape.

The right connecting member 13R has a first site 14R and a second site 15R. The left connecting member 13L has a first site 14L and a second site 15L. Each of the first sites 14R and 14L is connected to the main frame 5. The first site 14R is connected to the right main frame 5R. The first site 14L is connected to the left main frame 5L. Each of the second sites 15R and 15L is connected to the down frame 6. Each of the second sites 15R and 15L is connected to the front portion 7. The second site 15R is connected to the right front portion 7R. The second site 15L is connected to the left front portion 7L. The right connecting member 13R extends from the first site 14R to the second site 15R. The left connecting member 13L extends from the first site 14L to the second site 15L.

The second site 15R is disposed more forward than and lower than the first site 14R. The second site 15L is disposed more forward than and lower than the first site 14L.

The first site 14R is, for example, a rear end of the right connecting member 13R. The second site 15R is, for example, a front end of the right connecting member 13R. The first site 14L is, for example, a rear end of the left connecting member 13L. The second site 15L is, for example, a front end of the left connecting member 13L.

When the first sites 14R and 14L are not distinguished, they are referred to as "first site 14". When the second sites 15R and 15L are not distinguished, they are referred to as "second site 15".

The first site 14 is disposed lower than the front end 12a and the rear end 12b of the reinforcing frame 12. The first site 14 is disposed more rearward than the rear end 12b. The second site 15 is disposed lower than the front end 12a and the rear end 12b. The second site 15 is disposed more rearward than the front end 12a. The second site 15 is disposed more forward than the rear end 12b.

The first site 14 is disposed higher than and more rearward than the bracket 9. The second site 15 is disposed higher than and more forward than the bracket 9.

Each element of the vehicle body frame 3 is made of metal. For example, the connecting member 13 is made of metal. The connecting member 13 is not made of resin. The connecting member 13 has relatively high rigidity.

### <3. Arrangement of vehicle body frame 3 and battery 41>

Refer to FIGS. 3 to 7. The head pipe 4 is disposed more forward than the battery 41. The head pipe 4 does not overlap the battery 41 in vehicle side view. The head pipe 4 does not overlap the battery 41 in vehicle plan view. The head pipe 4 overlaps the battery 41 in vehicle front view.

The head pipe 4 is disposed at the same height position as a part of the battery 41. The head pipe 4 has an upper end 4a and a lower end 4b. The battery 41 has an upper end 41a and a lower end 41b. The upper end 4a of the head pipe 4 is disposed higher than the upper end 41a of the battery 41. The lower end 4b of the head pipe 4 is disposed lower than the upper end 41a of the battery 41. The lower end 4b of the head pipe 4 is disposed higher than the lower end 41b of the battery 41.

The main frame 5 overlaps the battery 41 in vehicle side view. The right main frame 5R overlaps the battery 41 in vehicle side view. The left main frame 5L overlaps the battery 41 in vehicle side view. In other words, the battery 41 overlaps the main frame 5 in vehicle side view. At least a part of the battery 41 overlaps the main frame 5 in vehicle side view. The battery 41 overlaps the right main frame 5R in vehicle side view. At least a part of the battery 41 overlaps the right main frame 5R in vehicle side view. The battery 41 overlaps the left main frame 5L in vehicle side view. At least a part of the battery 41 overlaps the left main frame 5L in vehicle side view.

The main frame 5 extends from a position more forward than the battery 41 to a position more rearward than the battery 41. The right main frame 5R extends from a position more forward than the battery 41 to a position more rearward than the battery 41. The left main frame 5L extends from a position more forward than the battery 41 to a position more rearward than the battery 41.

The battery 41 includes a portion located above the main frame 5 in vehicle side view, and a portion located below the main frame 5 in vehicle side view.

The main frame 5 does not overlap the battery 41 in vehicle plan view. The main frame 5 allows the battery 41 to move in the up-down direction Z with respect to the main frame 5.

The battery 41 is disposed between the right main frame 5R and the left main frame 5L. The right main frame 5R is disposed rightward of the battery 41. The right main frame 5R does not overlap the battery 41 in vehicle plan view. The left main frame 5L is disposed leftward of the battery 41. The left main frame 5L does not overlap the battery 41 in vehicle plan view. The battery 41 is movable upward with respect to the right main frame 5R and the left main frame 5L. The right main frame 5R and the left main frame 5L allow the battery 41 to move in the up-down direction Z with respect to the right main frame 5R and the left main frame 5L. Therefore, the separation distance between the right main frame 5R and the left main frame 5L in the transverse direction Y is sufficiently large.

The down frame 6 is disposed in front of the battery 41. The down frame 6 overlaps the battery 41 in vehicle front view. Specifically, the front portion 7 is disposed in front of the battery 41. The front portion 7 overlaps the battery 41 in vehicle front view.

The down frame 6 is disposed below the battery 41. Specifically, the lower portion 8 is disposed below the battery 41.

The down frame 6 does not overlap the battery 41 in vehicle side view. Specifically, the front portion 7 does not overlap the battery 41 in vehicle side view. The lower portion 8 does not overlap the battery 41 in vehicle side view.

The pivot frame 10 is disposed more rearward than the battery 41. The pivot frame 10 does not overlap the battery 41 in vehicle side view.

The pivot shaft portion 11 is disposed more rearward than the battery 41. The pivot shaft portion 11 is disposed lower than the battery 41. The pivot shaft portion 11 does not overlap the battery 41 in vehicle side view.

The reinforcing frame 12 overlaps the battery 41 in vehicle side view. The right reinforcing frame 12R overlaps the battery 41 in vehicle side view. The left reinforcing frame 12L overlaps the battery 41 in vehicle side view.

The rear end 12b of the reinforcing frame 12 overlaps the battery 41 in vehicle side view. The rear end 12Rb of the right reinforcing frame 12R overlaps the battery 41 in vehicle side view. The rear end 12Lb of the left reinforcing frame 12L overlaps the battery 41 in vehicle side view.

The front end 12a of the reinforcing frame 12 is disposed more forward than the battery 41. The front end 12a of the reinforcing frame 12 does not overlap the battery 41 in vehicle side view. The front end 12Ra of the right reinforcing frame 12R is disposed more forward than the battery 41. The front end 12Ra of the right reinforcing frame 12R does not overlap the battery 41 in vehicle side view. The front end 12La of the left reinforcing frame 12L is disposed more forward than the battery 41. The front end 12La of the left reinforcing frame 12L does not overlap the battery 41 in vehicle side view.

The reinforcing frame 12 overlaps the battery 41 in vehicle front view. The front end 12a of the reinforcing frame 12 overlaps the battery 41 in vehicle front view.

The reinforcing frame 12 does not overlap the battery 41 in vehicle plan view. The reinforcing frame 12 allows the battery 41 to move in the up-down direction Z with respect to the reinforcing frame 12.

The battery 41 is disposed between the right reinforcing frame 12R and the left reinforcing frame 12L. The right reinforcing frame 12R is disposed rightward of the battery 41. The rear end 12Rb of the right reinforcing frame 12R is disposed rightward of the battery 41. The right reinforcing frame 12R does not overlap the battery 41 in vehicle plan view. The left reinforcing frame 12L is disposed leftward of the battery 41. The rear end 12Lb of the left reinforcing frame 12L is disposed leftward of the battery 41. The left reinforcing frame 12L does not overlap the battery 41 in vehicle plan view. The battery 41 is movable upward with respect to the right reinforcing frame 12R and the left reinforcing frame 12L. The right reinforcing frame 12R and the left reinforcing frame 12L allow the battery 41 to move in the up-down direction Z with respect to the right reinforcing frame 12R and the left reinforcing frame 12L.

The connecting member 13 overlaps the battery 41 in vehicle side view. At least a part of the connecting member 13 overlaps the battery 41 in vehicle side view. The right connecting member 13R overlaps the battery 41 in vehicle side view. At least a part of the right connecting member 13R overlaps the battery 41 in vehicle side view. The left connecting member 13L overlaps the battery 41 in vehicle side view. At least a part of the left connecting member 13L overlaps the battery 41 in vehicle side view.

The first site 14 overlaps the battery 41 in vehicle side view. The first site 14R overlaps the battery 41 in vehicle side view. The first site 14L overlaps the battery 41 in vehicle side view.

The second site 15 is disposed more forward than the battery 41. The second site 15 does not overlap the battery 41 in vehicle side view.

The connecting member 13 does not overlap the battery 41 in vehicle front view. The right connecting member 13R is disposed more rightward than the battery 41 in vehicle front view. The left connecting member 13L is disposed more leftward than the battery 41 in vehicle front view.

The connecting member 13 does not overlap the battery 41 in vehicle plan view. The connecting member 13 allows the battery 41 to move in the up-down direction Z with respect to the connecting member 13.

The battery 41 is disposed between the right connecting member 13R and the left connecting member 13L. The right connecting member 13R is disposed rightward of the battery 41. The right connecting member 13R does not overlap the battery 41 in vehicle plan view. The left connecting member 13L is disposed leftward of the battery 41. The left connecting member 13L does not overlap the battery 41 in vehicle plan view. The battery 41 is movable upward with respect to the right connecting member 13R and the left connecting member 13L. The right connecting member 13R and the left connecting member 13L allow the battery 41 to move in the up-down direction Z with respect to the right connecting member 13R and the left connecting member 13L.

The connecting member 13 does not support the battery 41. The connecting member 13 is separated from the battery 41. The connecting member 13 is not in contact with the battery 41.

For example, the battery 41 is supported by the vehicle body frame 3 via a bracket (not illustrated).

### <4. Arrangement of vehicle body frame 3 and power unit 51>

Refer to FIGS. 3 to 7. The vehicle body frame 3 is classified as a cradle frame. The vehicle body frame 3 surrounds the power unit 51 in vehicle side view. The vehicle body frame 3 is located above, in front of, below, and behind the power unit 51. The configuration of the vehicle body frame 3 will be described.

The head pipe 4 is disposed more forward than the power unit 51. The head pipe 4 is disposed higher than the power unit 51. The head pipe 4 does not overlap the power unit 51 in vehicle side view. The head pipe 4 does not overlap the power unit 51 in vehicle plan view. The head pipe 4 does not overlap the power unit 51 in vehicle front view.

The main frame 5 is disposed above the power unit 51. The main frame 5 overlaps the power unit 51 in vehicle plan view. Specifically, the right main frame 5R is disposed above the power unit 51. The right main frame 5R overlaps the power unit 51 in vehicle plan view. The left main frame 5L is disposed above the power unit 51. The left main frame 5L overlaps the power unit 51 in vehicle plan view.

For example, the power unit 51 includes a portion located more rightward than the right main frame 5R in vehicle plan view, and a portion located more leftward than the right main frame 5R in vehicle plan view.

The main frame 5 does not overlap the power unit 51 in vehicle side view. The right main frame 5R does not overlap the power unit 51 in vehicle side view. The left main frame 5L does not overlap the power unit 51 in vehicle side view.

The main frame 5 passes through a position above the power unit 51 and extends from a position more forward than the power unit 51 to a position more rearward than the power unit 51. The right main frame 5R passes through a position above the power unit 51 and extends from a position more forward than the power unit 51 to a position more rearward than the power unit 51. The left main frame 5L passes through a position above the power unit 51 and extends from a position more forward than the power unit 51 to a position more rearward than the power unit 51.

The down frame 6 is disposed in front of the power unit 51. The down frame 6 overlaps the power unit 51 in vehicle front view. Specifically, the front portion 7 is disposed in front of the power unit 51. The front portion 7 overlaps the power unit 51 in vehicle front view.

For example, the power unit 51 includes a portion located more rightward than the right front portion 7R in vehicle front view, and a portion located more leftward than the right front portion 7R in vehicle front view.

The down frame 6 extends in the up-down direction Z in front of the power unit 51. The down frame 6 passes through a position in front of the power unit 51 and extends from a position higher than the power unit 51 to a position lower than the power unit 51. Specifically, the front portion 7 extends in the up-down direction Z in front of the power unit 51. The front portion 7 passes through a position in front of the power unit 51 and extends from a position higher than the power unit 51 to a position lower than the power unit 51.

The down frame 6 is disposed below the power unit 51. The down frame 6 overlaps the power unit 51 in vehicle bottom view. Specifically, the lower portion 8 is disposed below the power unit 51. The lower portion 8 overlaps the power unit 51 in vehicle bottom view.

For example, the power unit 51 includes a portion located more rightward than the right lower portion 8R in vehicle bottom view, and a portion located more leftward than the right lower portion 8R in vehicle bottom view.

The down frame 6 extends in the longitudinal direction X below the power unit 51. Specifically, the lower portion 8 extends in the longitudinal direction X below the power unit 51.

The down frame 6 does not substantially overlap the power unit 51 in vehicle side view. Specifically, the front portion 7 does not substantially overlap the power unit 51 in vehicle side view. The lower portion 8 does not substantially overlap the power unit 51 in vehicle side view.

In summary, the main frame 5 and the down frame 6 surround the power unit 51 in vehicle side view. The main frame 5 and the down frame 6 each extend so that the main frame 5 and the down frame 6 surround the power unit 51 in vehicle side view.

The power unit 51 is disposed below the main frame 5 and above the down frame 6. In other words, the main frame 5 is disposed above the power unit 51, and the down frame 6 is disposed below the power unit 51. Therefore, the separation distance between the main frame 5 and the down frame 6 in the up-down direction Z is sufficiently large. The separation distance between the right main frame 5R and the right lower portion 8R in the up-down direction Z is sufficiently large. The separation distance between the left main frame 5L and the left lower portion 8L in the up-down direction Z is sufficiently large.

The bracket 9 is disposed below the power unit 51. The bracket 9 supports the power unit 51. The bracket 9 supports the lower part of the power unit 51. The bracket 9 supports the electric motor 55. The down frame 6 supports the power unit 51 via the bracket 9.

The pivot frame 10 is disposed behind the power unit 51. Although not illustrated, the pivot frame 10 overlaps the power unit 51 in vehicle rear view.

For example, the power unit 51 includes a portion located more rightward than the right pivot frame 10R in vehicle rear view, and a portion located more leftward than the right pivot frame 10R in vehicle rear view.

The pivot frame 10 does not substantially overlap the power unit 51 in vehicle side view.

The pivot shaft portion 11 is disposed behind the power unit 51. The pivot shaft portion 11 is disposed at the same height position as a part of the power unit 51. Although not illustrated, the pivot shaft portion 11 overlaps the power unit 51 in vehicle rear view.

For example, the power unit 51 includes a portion located higher than the pivot shaft portion 11 in vehicle rear view, and a portion located lower than the pivot shaft portion 11 in vehicle rear view.

The pivot shaft portion 11 supports the power unit 51. The pivot shaft portion 11 supports the rear part of the power unit 51. The pivot shaft portion 11 supports the electric motor 55. However, the power unit 51 cannot swing around the pivot shaft portion 11.

The reinforcing frame 12 is disposed higher than the power unit 51. The reinforcing frame 12 does not overlap the power unit 51 in vehicle side view. Specifically, the right reinforcing frame 12R is disposed higher than the power unit 51. The right reinforcing frame 12R does not overlap the power unit 51 in vehicle side view. The left reinforcing frame 12L is disposed higher than the power unit 51. The left reinforcing frame 12L does not overlap the power unit 51 in vehicle side view.

The connecting member 13 overlaps the power unit 51 in vehicle side view. At least a part of the connecting member 13 overlaps the power unit 51 in vehicle side view. The right connecting member 13R overlaps the power unit 51 in vehicle side view. At least a part of the right connecting member 13R overlaps the power unit 51 in vehicle side view. The left connecting member 13L overlaps the power unit 51 in vehicle side view. At least a part of the left connecting member 13L overlaps the power unit 51 in vehicle side view.

The connecting member 13 overlaps the inverter 53 in vehicle side view. At least a part of the connecting member 13 overlaps the inverter 53 in vehicle side view. The right connecting member 13R overlaps the inverter 53 in vehicle side view. At least a part of the right connecting member 13R overlaps the inverter 53 in vehicle side view. The left connecting member 13L overlaps the inverter 53 in vehicle side view. At least a part of the left connecting member 13L overlaps the inverter 53 in vehicle side view.

The connecting member 13 is disposed higher than the electric motor 55. The connecting member 13 does not overlap the electric motor 55 in vehicle side view. Specifically, the right connecting member 13R is disposed higher than the electric motor 55. The right connecting member 13R does not overlap the electric motor 55 in vehicle side view. The left connecting member 13L is disposed higher than the electric motor 55. The left connecting member 13L does not overlap the electric motor 55 in vehicle side view.

The first site 14 is disposed higher than the power unit 51. The first site 14 does not overlap the power unit 51 in vehicle side view. The second site 15 is disposed more forward than the power unit 51. The second site 15 does not overlap the power unit 51 in vehicle side view.

The power unit 51 is disposed between the right connecting member 13R and the left connecting member 13L. The inverter 53 is disposed between the right connecting member 13R and the left connecting member 13L. The right connecting member 13R is disposed rightward of the power unit 51. The right connecting member 13R is disposed rightward of the inverter 53. The left connecting member 13L is disposed leftward of the power unit 51. The left connecting member 13L is disposed leftward of the inverter 53.

The connecting member 13 is connected to the power unit 51. The connecting member 13 supports the power unit 51. The connecting member 13 supports the upper part of the power unit 51. The connecting member 13 supports the inverter 53. Each of the right connecting member 13R and the left connecting member 13L supports the power unit 51. Each of the right connecting member 13R and the left connecting member 13L supports the inverter 53.

The right connecting member 13R includes a third site 16R. The left connecting member 13L includes a third site 16L. Each of the third sites 16R and 16L is connected to the power unit 51. Each of the third sites 16R and 16L is connected to the inverter 53.

Each of the third sites 16R and 16L overlaps the power unit 51 in vehicle side view. Each of the third sites 16R and 16L overlaps the inverter 53 in vehicle side view.

The third site 16R is disposed between the first site 14R and the second site 15R. The third site 16R is disposed more forward than and lower than the first site 14R. The third site 16R is disposed more rearward than and higher than the second site 15R. The right connecting member 13R passes through the third site 16R and extends from the first site 14R to the second site 15R. The right connecting member 13R extends from the first site 14R to the second site 15R through the third site 16R. For example, the first site 14R, the third site 16R, and the second site 15R are arranged on a straight line in vehicle side view. For example, the third site 16R is located on a straight line connecting the first site 14R and the second site 15R in vehicle side view. For example, the right connecting member 13R passes through the third site 16R and linearly extends from the first site 14R to the second site 15R in vehicle side view. For example, the right connecting member 13R linearly extends from the first site 14R to the second site 15R through the third site 16R in vehicle side view. Similarly, the third site 16L is disposed between the first site 14L and the second site 15L. The third site 16L is disposed more forward than and lower than the first site 14L. The third site 16L is disposed more rearward than and higher than the second site 15L. The left connecting member 13L passes through the third site 16L and extends from the first site 14L and the second site 15L. The left connecting member 13L extends from the first site 14L to the second site 15L through the third site 16L. For example, the first site 14L, the third site 16L, and the second site 15L are arranged on a straight line in vehicle side view. For example, the third site 16L is located on a straight line connecting the first site 14L and the second site 15L in vehicle side view. For example, the left connecting member 13L passes through the third site 16L and linearly extends from the first site 14L to the second site 15L in vehicle side view. For example, the left connecting member 13L linearly extends from the first site 14L to the second site 15L through the third site 16L in vehicle side view.

When the third sites 16R and 16L are not distinguished, they are referred to as "third site 16".

The third site 16 is disposed more forward than and higher than the bracket 9. The third site 16 is disposed more forward than and higher than the pivot shaft portion 11.

### <5. Connecting member 13>

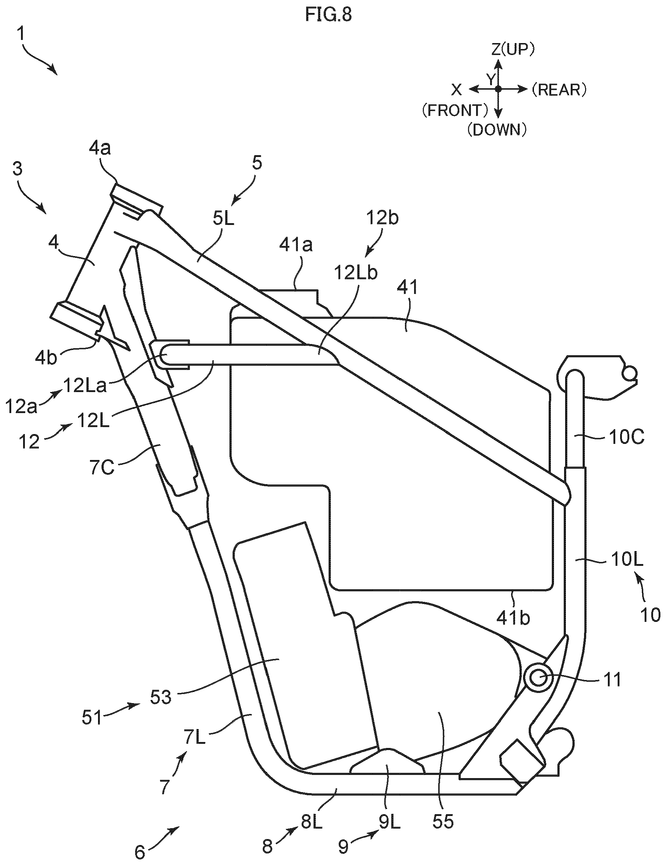

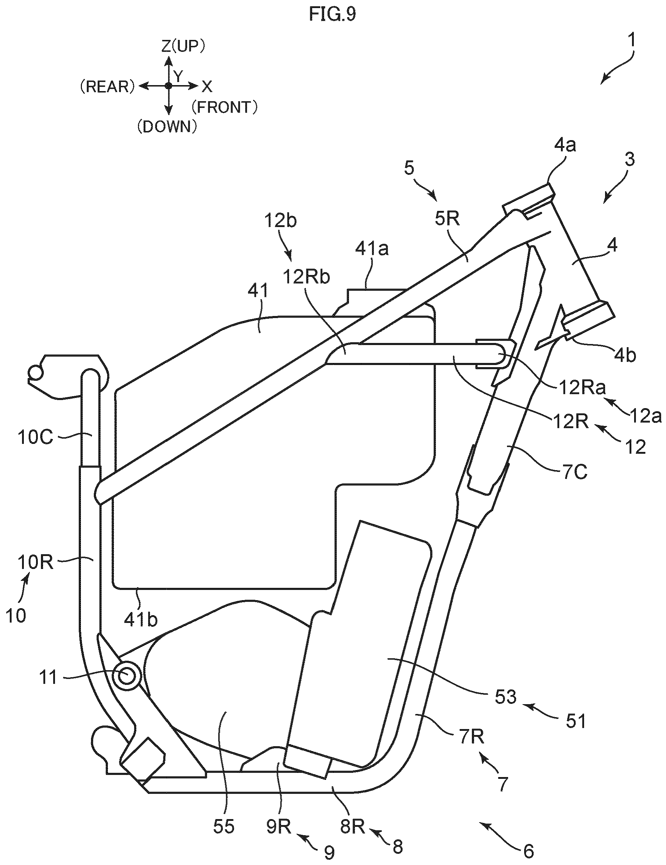

FIG. 8 is a left side view of the vehicle body frame 3, the battery 41, and the power unit 51. FIG. 9 is a right side view of the vehicle body frame 3, the battery 41, and the power unit 51. In FIGS. 8 and 9, the connecting member 13 is detached from the main frame 5 and the down frame 6.

The connecting member 13 is detachable from the main frame 5 and the down frame 6. The connecting member 13 is separable from the main frame 5 and the down frame 6. The connecting member 13 can be attached to and detached from the main frame 5 and the down frame 6.

Specifically, the right connecting member 13R is detachable from the right main frame 5R and the down frame 6. The right connecting member 13R is separable from the right main frame 5R and the down frame 6. The right connecting member 13R can be attached to and detached from the right main frame 5R and the down frame 6. The left connecting member 13L is detachable from the left main frame 5L and the down frame 6. The left connecting member 13L is separable from the left main frame 5L and the down frame 6. The left connecting member 13L can be attached to and detached from the left main frame 5L and the down frame 6.

The connecting member 13 is detachable from the power unit 51. The connecting member 13 is separable from the power unit 51. The connecting member 13 can be attached to and detached from the power unit 51.

Specifically, the right connecting member 13R is detachable from the power unit 51. The right connecting member 13R is separable from the power unit 51. The right connecting member 13R can be attached to and detached from the power unit 51. The left connecting member 13L is detachable from the power unit 51. The left connecting member 13L is separable from the power unit 51. The left connecting member 13L can be attached to and detached from the power unit 51.

When the connecting member 13 is detached from the main frame 5 and the down frame 6, the connecting member 13 does not overlap the power unit 51 in vehicle side view. Therefore, when the connecting member 13 is detached from the main frame 5 and the down frame 6, the connecting member 13 allows the power unit 51 to move in the transverse direction Y with respect to the main frame 5 and the down frame 6. For convenience, the space between the main frame 5 and the down frame 6 is referred to as an internal space. For example, when the right connecting member 13R is detached from the main frame 5 and the down frame 6, the right connecting member 13R allows the power unit 51 to move rightward from the internal space. For example, when the left connecting member 13L is detached from the main frame 5 and the down frame 6, the left connecting member 13L allows the power unit 51 to move leftward from the internal space.

Refer to FIGS. 3 and 4. On the other hand, when the connecting member 13 is attached to the main frame 5 and the down frame 6, the connecting member 13 overlaps the power unit 51 in vehicle side view. Therefore, when the connecting member 13 is attached to the main frame 5 and the down frame 6, the connecting member 13 prohibits the power unit 51 to move in the transverse direction Y with respect to the main frame 5 and the down frame 6. For example, when the right connecting member 13R is attached to the main frame 5 and the down frame 6, the right connecting member 13R prohibits the power unit 51 to move rightward from the internal space. For example, when the left connecting member 13L is attached to the main frame 5 and the down frame 6, the left connecting member 13L prohibits the power unit 51 to move leftward from the internal space.

Refer to FIGS. 3 and 4. The straddled electric vehicle 1 includes a fastening member 17. The fastening member 17 attaches and detaches the connecting member 13 and the main frame 5. The fastening member 17 couples/separates the connecting member 13 and the main frame 5. The fastening member 17 fastens the connecting member 13 and the main frame 5. The fastening member 17 is attached to the first site 14. The fastening member 17 attaches and detaches the first site 14 and the main frame 5.

The straddled electric vehicle 1 includes a fastening member 18. The fastening member 18 attaches and detaches the connecting member 13 and the down frame 6. The fastening member 18 couples/separates the connecting member 13 and the down frame 6. The fastening member 18 fastens the connecting member 13 and the down frame 6. The fastening member 18 is attached to the second site 15. The fastening member 18 attaches and detaches the second site 15 and the down frame 6.

The straddled electric vehicle 1 includes a fastening member 19. The fastening member 19 attaches and detaches the connecting member 13 and the power unit 51. The fastening member 19 couples/separates the connecting member 13 and the power unit 51. The fastening member 19 fastens the connecting member 13 and the power unit 51. The fastening member 19 is attached to the third site 16. The fastening member 19 attaches and detaches the third site 16 and the power unit 51.

The fastening member 17 includes a right fastening member 17R. The fastening member 18 includes a right fastening member 18R. The fastening member 19 includes a right connecting member 19R. The right fastening member 17R attaches and detaches the first site 14R and the main frame 5. The right fastening member 18R attaches and detaches the second site 15R and the down frame 6. The right fastening member 19R attaches and detaches the third site 16R and the power unit 51.

The fastening member 17 includes a left fastening member 17L. The fastening member 18 includes a left fastening member 18L. The fastening member 19 includes a left connecting member 19L. The left fastening member 17L attaches and detaches the first site 14L and the main frame 5. The left fastening member 18L attaches and detaches the second site 15L and the down frame 6. The left fastening member 19L attaches and detaches the third site 16L and the power unit 51.

The fastening members 17 to 19, the right fastening members 17R to 19R, and the left fastening members 17L to 19L each are, for example, bolts.

One of the right connecting member 13R and the left connecting member 13L is an example of the first connecting member in the present invention. The other of the right connecting member 13R and the left connecting member 13L is an example of the second connecting member in the present invention. Each of the fastening member 17, the right fastening member 17R, and the left fastening member 17L is an example of the first fastening member in the present invention. Each of the fastening member 18, the right fastening member 18R, and the left fastening member 18L is an example of the second fastening member in the present invention. Each of the fastening member 19, the right fastening member 19R, and the left fastening member 19L is an example of the third fastening member in the present invention.

The head pipe 4 and the main frame 5 are connected by welding, for example. Therefore, the head pipe 4 and the main frame 5 are inseparable from each other. Similarly, the head pipe 4 and the down frame 6 are connected by welding, for example. Therefore, the head pipe 4 and the down frame 6 are also inseparable from each other. Thus, the main frame 5 and the down frame 6 are inseparable from each other.

The main frame 5, the down frame 6, and the pivot frame 10 are inseparable from one another.

The main frame 5, the down frame 6, and the reinforcing frame 12 are inseparable from one another.

The pivot shaft portion 11 is detachable from the pivot frame 10, for example.

### <6. Procedure for attaching and detaching battery 41 and power unit 51 to and from straddled electric vehicle 1>

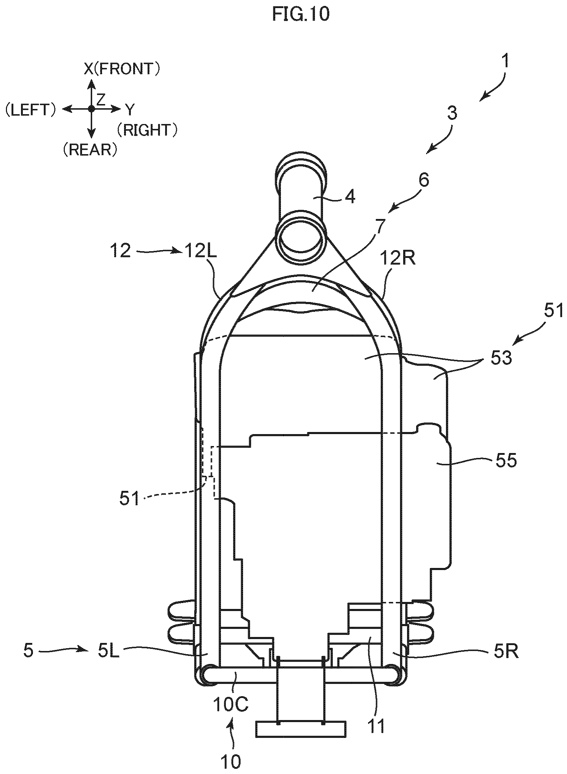

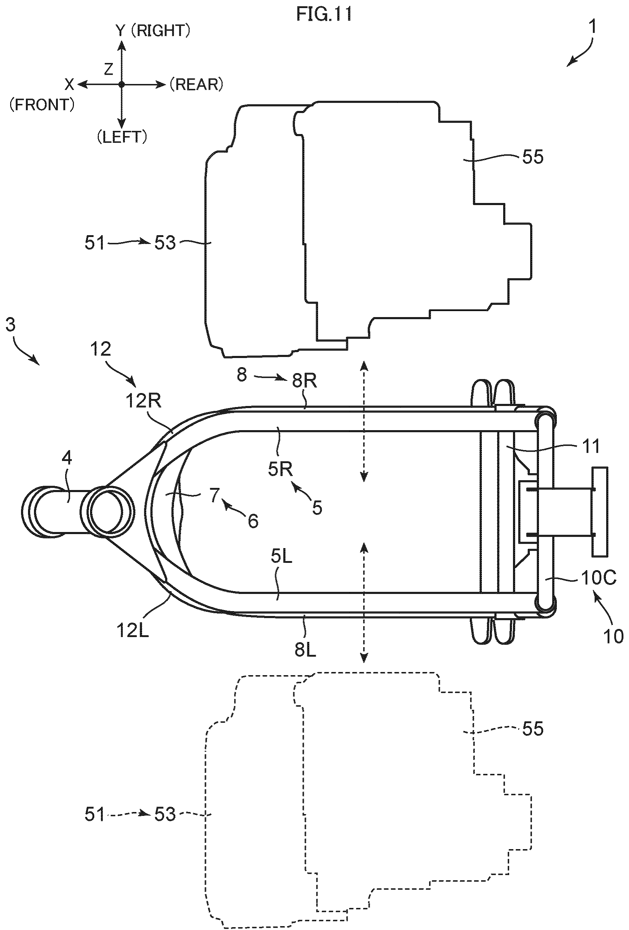

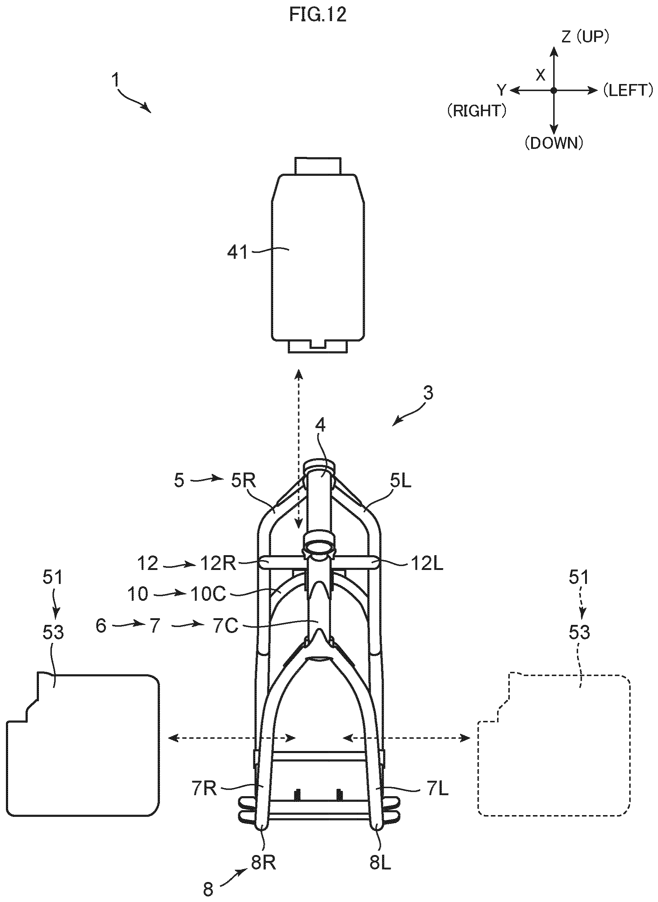

FIG. 10 is a plan view of the vehicle body frame 3 and the power unit 51. FIG. 11 is a plan view for explaining a procedure of attaching and detaching the power unit 51 to and from the vehicle body frame 3. FIG. 12 is a front view for explaining a procedure of attaching and detaching the battery 41 and the power unit 51 to and from the vehicle body frame 3. The procedure of detaching the power unit 51 from the straddled electric vehicle 1 includes a first step, a second step, and a third step.

### First step

The battery 41 is detached from the vehicle body frame 3. Specifically, coupling between a bracket (not illustrated) and the battery 41 is released. Then, the battery 41 is moved upward with respect to the main frame 5. The battery 41 passes between the right main frame 5R and the left main frame 5L. The battery 41 passes between the right reinforcing frame 12R and the left reinforcing frame 12L. The battery 41 passes between the right connecting member 13R and the left connecting member 13L. The battery 41 moves to a position above the main frame 5. Thereby, the battery 41 is detached from the straddled electric vehicle 1.

FIG. 12 illustrates the battery 41 detached from the vehicle body frame 3. The entirety of the battery 41 is located outside the straddled electric vehicle 1. For example, the entirety of the battery 41 is located higher than the vehicle body frame 3. Since the battery 41 is detached from the straddled electric vehicle 1, the battery 41 is not illustrated in FIGS. 10 and 11.

### Second step

The connecting member 13 is detached from the main frame 5 and the down frame 6. Specifically, the fastening member 17 is removed, and the coupling between the main frame 5 and the connecting member 13 is released. Then, the connecting member 13 is separated from the main frame 5. The fastening member 18 is removed, and the coupling between the down frame 6 and the connecting member 13 is released. Then, the connecting member 13 is separated from the down frame 6.

The connecting member 13 is detached from the power unit 51. Specifically, the fastening member 19 is removed, and the coupling between the power unit 51 and the connecting member 13 is released. Then, the connecting member 13 is separated from the power unit 51.

Since the connecting member 13 is detached from the main frame 5 and the down frame 6, the connecting member 13 is not illustrated in FIGS. 10 to 12. After the connecting member 13 is detached from the main frame 5 and the down frame 6, the connecting member 13 does not overlap the power unit 51 in vehicle side view. Therefore, the connecting member 13 allows the power unit 51 to move in the transverse direction Y with respect to the main frame 5 and the down frame 6.

### Third step

The coupling between the power unit 51 and the bracket 9 is released. The coupling between the power unit 51 and the pivot shaft portion 11 is released. Then, the power unit 51 is detached from the vehicle body frame 3. Specifically, the power unit 51 is moved in the transverse direction Y with respect to the main frame 5 and the down frame 6. The power unit 51 is moved in the transverse direction Y from the internal space between the main frame 5 and the down frame 6. For example, the power unit 51 may move rightward with respect to the main frame 5 and the down frame 6. Alternatively, the power unit 51 may move leftward with respect to the main frame 5 and the down frame 6. The power unit 51 moves to the outside of the internal space. Thereby, the power unit 51 is detached from the straddled electric vehicle 1.

FIGS. 12 and 13 illustrate the power unit 51 detached from the vehicle body frame 3. The entirety of the power unit 51 is located outside the straddled electric vehicle 1. The entirety of the power unit 51 is located outside the internal space. For example, the entirety of the power unit 51 is located rightward of the vehicle body frame 3. Alternatively, the entirety of the power unit 51 is located leftward of the vehicle body frame 3. In FIGS. 12 and 13, the power unit 51 located rightward of the vehicle body frame 3 is indicated by a solid line. In FIGS. 12 and 13, the power unit 51 located leftward of the vehicle body frame 3 is indicated by a broken line.

The procedure of attaching the power unit 51 to the vehicle body frame 3 is reverse to the procedure of detaching the power unit 51 from the vehicle body frame 3. The procedure of attaching the power unit 51 to the straddled electric vehicle 1 includes a fourth step, a fifth step, and a sixth step.

### Fourth step

In the fourth step, the connecting member 13 is still detached from the main frame 5 and the down frame 6. Therefore, in the fourth step, the connecting member 13 allows the power unit 51 to move in the transverse direction Y with respect to the main frame 5 and the down frame 6.

In the fourth step, the power unit 51 is mounted on the vehicle body frame 3. Specifically, the power unit 51 is moved in the transverse direction Y toward the main frame 5 and the down frame 6. For example, when the power unit 51 is located rightward of the main frame 5 and the down frame 6, the power unit 51 is moved leftward. For example, when the power unit 51 is located leftward of the main frame 5 and the down frame 6, the power unit 51 is moved rightward. The power unit 51 is installed in the internal space between the main frame 5 and the down frame 6. Thereby, the power unit 51 is mounted on the straddled electric vehicle 1.

### Fifth step

The connecting member 13 is attached to the main frame 5 and the down frame 6. Specifically, the main frame 5 and the connecting member 13 are coupled by the fastening member 17. The down frame 6 and the connecting member 13 are coupled by the fastening member 18. Thereby, the connecting member 13 is fastened to the main frame 5 and the down frame 6.

The connecting member 13 is attached to the power unit 51. Specifically, the power unit 51 and the connecting member 13 are coupled by the fastening member 19. Thereby, the connecting member 13 is fastened to the power unit 51.

After the connecting member 13 is attached to the main frame 5 and the down frame 6, the connecting member 13 overlaps the power unit 51 in vehicle side view. Therefore, the connecting member 13 prohibits the power unit 51 to move in the transverse direction Y with respect to the main frame 5 and the down frame 6.

The power unit 51 is coupled to the bracket 9. The power unit 51 is coupled to the pivot shaft portion 11. Thereby, the power unit 51 is attached to the straddled electric vehicle 1.

### Sixth step

The battery 41 is mounted on the vehicle body frame 3. Specifically, the battery 41 is moved from a position above the main frame 5. The battery 41 is moved toward the main frame 5. The battery 41 moves downward with respect to the main frame 5. The battery 41 passes between the right main frame 5R and the left main frame 5L. The battery 41 passes between the right reinforcing frame 12R and the left reinforcing frame 12L. The battery 41 passes between the right connecting member 13R and the left connecting member 13L. The battery 41 is installed between the right main frame 5R and the left main frame 5L. Thereby, the battery 41 is mounted on the straddled electric vehicle 1.

The battery 41 is coupled to a bracket (not illustrated). That is, the battery 41 is supported by the vehicle body frame 3 via a bracket (not illustrated). Thereby, the battery 41 is mounted on the straddled electric vehicle 1.

As described above, when the battery 41 moves in the up-down direction Z with respect to the main frame 5, the battery 41 is attached to and detached from the straddled electric vehicle 1.

The power unit 51 is attached to and detached from the straddled electric vehicle 1 by moving the power unit 51 in the transverse direction Y with respect to the main frame 5 and the down frame 6.

### <7. Effects>

The straddled electric vehicle 1 includes the main frame 5, the down frame 6, and the power unit 51. The main frame 5 extends in the longitudinal direction X. The down frame 6 is disposed below the main frame 5 in vehicle side view. The power unit 51 is disposed below the main frame 5 and above the down frame 6 in vehicle side view. Therefore, the power unit 51 is firmly supported.

The straddled electric vehicle 1 includes the connecting member 13. The connecting member 13 is connected to the main frame 5 and the down frame 6. The connecting member 13 overlaps the power unit 51 in vehicle side view. Specifically, when the connecting member 13 is attached to the main frame 5 and the down frame 6, the connecting member 13 overlaps the power unit 51 in vehicle side view. Therefore, the connecting member 13 appropriately reinforces the main frame 5 and the down frame 6. Thus, the main frame 5 and the down frame 6 have appropriate rigidity.

The connecting member 13 is detachable from the main frame 5 and the down frame 6. When the connecting member 13 is detached from the main frame 5 and the down frame 6, the connecting member 13 does not overlap the power unit 51 in vehicle side view. Therefore, when the connecting member 13 is detached from the main frame 5 and the down frame 6, the power unit 51 is attached to and detached from the straddled electric vehicle 1 without the power unit 51 interfering with the connecting member 13. Thus, the power unit 51 is easily attached to and detached from the straddled electric vehicle 1.

As described above, the straddled electric vehicle 1 firmly supports the power unit 51. The straddled electric vehicle 1 provides appropriate rigidity to the main frame 5 and the down frame 6. The straddled electric vehicle 1 allows the power unit 51 to be easily attached to and detached from the straddled electric vehicle 1.

As described above, the main frame 5 is disposed above the power unit 51, and the down frame 6 is disposed below the power unit 51. Therefore, the separation distance between the main frame 5 and the down frame 6 in the up-down direction Z is relatively large. However, even when the main frame 5 is disposed above the power unit 51 and the down frame 6 is disposed below the power unit 51, the main frame 5 and the down frame 6 have appropriate rigidity. This is because the connecting member 13 is connected to the main frame 5 and the down frame 6, and the connecting member 13 overlaps the power unit 51 in vehicle side view. Rather, when the main frame 5 is disposed above the power unit 51 and the down frame 6 is disposed below the power unit 51, the connecting member 13 is very useful. When the main frame 5 is disposed above the power unit 51 and the down frame 6 is disposed below the power unit 51, the connecting member 13 is very useful for reinforcing the main frame 5 and the down frame 6.

When the connecting member 13 is detached from the main frame 5 and the down frame 6, the connecting member 13 allows the power unit 51 to move in the transverse direction Y with respect to the main frame 5 and the down frame 6. Therefore, when the connecting member 13 is detached from the main frame 5 and the down frame 6, it is easy for the power unit 51 to move in the transverse direction Y with respect to the main frame 5 and the down frame 6. The power unit 51 is attached to and detached from the straddled electric vehicle 1 by moving the power unit 51 in the transverse direction Y with respect to the main frame 5 and the down frame 6. Thus, when the connecting member 13 is detached from the main frame 5 and the down frame 6, the power unit 51 is more easily attached to and detached from the straddled electric vehicle 1.

The straddled electric vehicle 1 includes the fastening members 17 and 18. The fastening member 17 attaches and detaches the main frame 5 and the connecting member 13. The fastening member 18 attaches and detaches the down frame 6 and the connecting member 13. Therefore, it is easy to attach the connecting member 13 to the main frame 5 and the down frame 6. It is easy to detach the connecting member 13 from the main frame 5 and the down frame 6.

The main frame 5 and the down frame 6 surround the power unit 51 in vehicle side view. Even when the main frame 5 and the down frame 6 surround the power unit 51 in vehicle side view, the power unit 51 is attached to and detached from the straddled electric vehicle 1 without the power unit 51 interfering with the main frame 5 or the down frame 6. That is, even when the main frame 5 and the down frame 6 surround the power unit 51 in vehicle side view, the power unit 51 is easily attached to and detached from the straddled electric vehicle 1. This is because the connecting member 13 is detachable from the main frame 5 and the down frame 6. Rather, when the main frame 5 and the down frame 6 surround the power unit 51 in vehicle side view, the connecting member 13 is detachable from the main frame 5 and the down frame 6, which is very useful. When the main frame 5 and the down frame 6 surround the power unit 51 in vehicle side view, the connecting member 13 is very useful for attaching and detaching the power unit 51 to and from the straddled electric vehicle 1.

The down frame 6 has the front portion 7 and the lower portion 8. The front portion 7 is disposed in front of the power unit 51. The front portion 7 passes through a position in front of the power unit 51 and extends from a position higher than the power unit 51 to a position lower than the power unit 51. The lower portion 8 extends rearward from the front portion 7. The lower portion 8 is disposed below the power unit 51. The power unit 51 is disposed above the lower portion 8. Therefore, the power unit 51 is suitably disposed above the down frame 6.

The power unit 51 includes the inverter 53 and the electric motor 55. Therefore, the power unit 51 suitably generates mechanical energy for propulsion of the straddled electric vehicle 1 from electric energy. In other words, the power unit 51 suitably generates power for driving the straddled electric vehicle 1 from the electric power.

The connecting member 13 overlaps the inverter 53 in vehicle side view. Specifically, when the connecting member 13 is attached to the main frame 5 and the down frame 6, the connecting member 13 overlaps the inverter 53 in vehicle side view. Therefore, the connecting member 13 suitably overlaps the power unit 51 in vehicle side view.

The connecting member 13 supports the power unit 51. Specifically, when the connecting member 13 is attached to the main frame 5 and the down frame 6, the connecting member 13 supports the power unit 51. Therefore, the power unit 51 is more firmly supported.

The connecting member 13 includes the first site 14, the second site 15, and the third site 16. The first site 14 is connected to the main frame 5. The second site 15 is connected to the down frame 6. The third site 16 is connected to the power unit 51. The third site 16 is disposed between the first site 14 and the second site 15. Therefore, the third site 16 has appropriate rigidity. For example, the third site 16 is less likely to be flexible. Thus, the connecting member 13 suitably supports the power unit 51.

The connecting member 13 passes through the third site 16 and extends from the first site 14 to the second site 15. Therefore, the third site 16 has more appropriate rigidity. Thus, the connecting member 13 more suitably supports the power unit 51.

The right connecting member 13R is connected to the main frame 5 and the down frame 6. The right connecting member 13R is disposed at a position rightward of the power unit 51. Specifically, when the right connecting member 13R is attached to the main frame 5 and the down frame 6, the right connecting member 13R is disposed at a position rightward of the power unit 51. The right connecting member 13R overlaps the power unit 51 in vehicle side view. Specifically, when the right connecting member 13R is attached to the main frame 5 and the down frame 6, the right connecting member 13R overlaps the power unit 51 in vehicle side view. Therefore, the right connecting member 13R appropriately reinforces the main frame 5 and the down frame 6. Thus, the main frame 5 and the down frame 6 have appropriate rigidity.

The left connecting member 13L is connected to the main frame 5 and the down frame 6. The left connecting member 13L is disposed at a position leftward of the power unit 51. Specifically, when the left connecting member 13L is attached to the main frame 5 and the down frame 6, the left connecting member 13L is disposed leftward of the power unit 51. The left connecting member 13L overlaps the power unit 51 in vehicle side view. Specifically, when the left connecting member 13L is attached to the main frame 5 and the down frame 6, the left connecting member 13L overlaps the power unit 51 in vehicle side view. Therefore, the left connecting member 13L appropriately reinforces the main frame 5 and the down frame 6. Thus, the main frame 5 and the down frame 6 have more appropriate rigidity.

The right connecting member 13R is detachable from the main frame 5 and the down frame 6. When the right connecting member 13R is detached from the main frame 5 and the down frame 6, the right connecting member 13R does not overlap the power unit 51 in vehicle side view. Therefore, when the right connecting member 13R is detached from the main frame 5 and the down frame 6, the right connecting member 13R allows the power unit 51 to move rightward with respect to the main frame 5 and the down frame 6. When the right connecting member 13R is detached from the main frame 5 and the down frame 6, the power unit 51 is attached to and detached from the straddled electric vehicle 1 without the power unit 51 interfering with the right connecting member 13R. Thus, the power unit 51 is more easily attached to and detached from the straddled electric vehicle 1.

The left connecting member 13L is detachable from the main frame 5 and the down frame 6. When the left connecting member 13L is detached from the main frame 5 and the down frame 6, the left connecting member 13L does not overlap the power unit 51 in vehicle side view. Therefore, when the left connecting member 13L is detached from the main frame 5 and the down frame 6, the left connecting member 13L allows the power unit 51 to move leftward with respect to the main frame 5 and the down frame 6. When the left connecting member 13L is detached from the main frame 5 and the down frame 6, the power unit 51 is attached to and detached from the straddled electric vehicle 1 without the power unit 51 interfering with the left connecting member 13L. Thus, the power unit 51 is more easily attached to and detached from the straddled electric vehicle 1.

When each of the right connecting member 13R and the left connecting member 13L is detached from the main frame 5 and the down frame 6, it is easy to move the power unit 51 in both directions, that is, rightward and leftward with respect to the main frame 5 and the down frame 6. Thus, the power unit 51 is more easily attached to and detached from the straddled electric vehicle 1.

The straddled electric vehicle 1 includes the battery 41. The connecting member 13 overlaps the battery 41 in vehicle side view. Specifically, when the connecting member 13 is attached to the main frame 5 and the down frame 6, the connecting member 13 overlaps the battery 41 in vehicle side view. Therefore, the connecting member 13 suitably protects the battery 41. For example, the connecting member 13 suitably prevents damage to the battery 41. For example, the connecting member 13 suitably prevents damage to the battery case.

The battery 41 is disposed above the power unit 51. The main frame 5 includes the right main frame 5R and the left main frame 5L. The right main frame 5R is disposed rightward of the battery 41. The left main frame 5L is disposed leftward of the battery 41. Therefore, the separation distance between the right main frame 5R and the left main frame 5L in the transverse direction Y is relatively large. However, even when the right main frame 5R is disposed rightward of the battery 41 and the left main frame 5L is disposed leftward of the battery 41, the main frame 5 has appropriate rigidity. This is because the connecting member 13 is connected to the main frame 5 and the down frame 6, and the connecting member 13 overlaps the power unit 51 in vehicle side view. Rather, when the right main frame 5R is disposed rightward of the battery 41 and the left main frame 5L is disposed leftward of the battery 41, the connecting member 13 is very useful. When the right main frame 5R is disposed rightward of the battery 41 and the left main frame 5L is disposed leftward of the battery 41, the connecting member 13 is very useful for reinforcing the main frame 5.

The power unit 51 is attached to and detached from the straddled electric vehicle 1 by moving the power unit 51 in the transverse direction Y with respect to the main frame 5 and the down frame 6. That is, the moving direction of the power unit 51 when the power unit 51 is attached to and detached from the straddled electric vehicle 1 is the transverse direction Y. When the battery 41 moves in the up-down direction Z with respect to the main frame 5, the battery 41 is attached to and detached from the straddled electric vehicle 1. That is, the moving direction of the battery 41 when the battery 41 is attached to and detached from the straddled electric vehicle 1 is the up-down direction Z. Therefore, the moving direction of the power unit 51 when the power unit 51 is attached to and detached from the straddled electric vehicle 1 is different from the moving direction of the battery 41 when the battery 41 is attached to and detached from the straddled electric vehicle 1. For example, the moving direction of the power unit 51 when the power unit 51 is attached to and detached from the straddled electric vehicle 1 is orthogonal to the moving direction of the battery 41 when the battery 41 is attached to and detached from the straddled electric vehicle 1. Thus, the power unit 51 is attached to and detached from the straddled electric vehicle 1 without the power unit 51 interfering with the battery 41. Therefore, the power unit 51 is more easily attached to and detached from the straddled electric vehicle 1. Similarly, the battery 41 is attached to and detached from the straddled electric vehicle 1 without the battery 41 interfering with the power unit 51. Therefore, the battery 41 is easily attached to and detached from the straddled electric vehicle 1.

A movement region of the power unit 51 when the power unit 51 is attached to and detached from the straddled electric vehicle 1 is located lower than a movement region of the battery 41 when the battery 41 is attached to and detached from the straddled electric vehicle 1. That is, the movement region of the power unit 51 when the power unit 51 is attached to and detached from the straddled electric vehicle 1 does not overlap the movement region of the battery 41 when the battery 41 is attached to and detached from the straddled electric vehicle 1. Thus, the power unit 51 is attached to and detached from the straddled electric vehicle 1 without the power unit 51 interfering with the battery 41. Therefore, the power unit 51 is more easily attached to and detached from the straddled electric vehicle 1. Similarly, the battery 41 is attached to and detached from the straddled electric vehicle 1 without the battery 41 interfering with the power unit 51. Therefore, the battery 41 is more easily attached to and detached from the straddled electric vehicle 1.

### <8. Modified embodiments>

The present invention is not limited to the above embodiment, and can be modified as follows.

(1) In the embodiment, the straddled electric vehicle 1 included both of the right connecting member 13R and the left connecting member 13L. However, the present invention is not limited thereto. The straddled electric vehicle 1 may include only one of the right connecting member 13R and the left connecting member 13L. The other of the right connecting member 13R and the left connecting member 13L may be omitted. Also by present modified embodiment, the connecting member 13 appropriately reinforces the main frame 5 and the down frame 6.

In the present modified embodiment, one of the right connecting member 13R and the left connecting member 13L is an example of the first connecting member in the present invention.

(2) In the embodiment, the right connecting member 13R and the left connecting member 13L each were detachable from the main frame 5 and the down frame 6. However, the present invention is not limited thereto. Only one of the right connecting member 13R and the left connecting member 13L may be detachable from the main frame 5 and the down frame 6. The other of the right connecting member 13R and the left connecting member 13L may be undetachable from the main frame 5 and the down frame 6. The other of the right connecting member 13R and the left connecting member 13L may be inseparable from the main frame 5. The other of the right connecting member 13R and the left connecting member 13L may be inseparable from the down frame 6. In the present modified embodiment, when one of the right connecting member 13R and the left connecting member 13L is detached from the main frame 5 and the down frame 6, the power unit 51 is easily attached to and detached from the straddled electric vehicle 1. Thus, also by the present modified embodiment, the straddled electric vehicle 1 allows the power unit 51 to be easily attached to and detached from the straddled electric vehicle 1.

In the present modified embodiment, one of the right connecting member 13R and the left connecting member 13L is an example of the first connecting member in the present invention. In the present modified embodiment, the other of the right connecting member 13R and the left connecting member 13L is an example of the second connecting member in the present invention.

(3) In the embodiment, the connecting member 13 had a rod shape or a pipe shape. However, the present invention is not limited thereto. At least a part of the connecting member 13 may have a plate shape. For example, at least a part of the connecting member 13 may have a plate shape perpendicular to the transverse direction Y. A portion of the battery 41 overlapping the connecting member 13 in vehicle side view is referred to as "protection area". According to the present modified embodiment, it is easy to expand the protection area of the battery 41. Thus, the connecting member 13 is more suitably protected by the battery 41.

(4) In the embodiment, the connecting member 13 supported the power unit 51. However, the present invention is not limited thereto. The connecting member 13 may not support the power unit 51.
(5) In the embodiment, the connecting member 13 supported the inverter 53. However, the present invention is not limited thereto. The connecting member 13 may support at least one of the inverter 53 and the electric motor 55.
(6) In the embodiment, the connecting member 13 is connected to the front portion 7. However, the present invention is not limited thereto. The connecting member 13 may be connected to the lower portion 8.
(7) In the embodiment, the connecting member 13 extended in the longitudinal direction X in vehicle side view. However, the present invention is not limited thereto. The connecting member 13 may extend in the up-down direction Z in vehicle side view.
(8) In the embodiment, the right connecting member 13R was connected to the right front portion 7R. However, the present invention is not limited thereto. The right connecting member 13R may be connected to the central front portion 7C. In the embodiment, the left connecting member 13L was connected to the left front portion 7L. However, the present invention is not limited thereto. The left connecting member 13L may be connected to the central front portion 7C.
(9) In the embodiment, the right connecting member 13R linearly extended in vehicle side view. However, the present invention is not limited thereto. The right connecting member 13R may be curved in vehicle side view. In the embodiment, the left connecting member 13L linearly extended in vehicle side view. However, the present invention is not limited thereto. The left connecting member 13L may be curved in vehicle side view.
(10) In the embodiment, the right connecting member 13R was curved in vehicle plan view. However, the present invention is not limited thereto. The right connecting member 13R may linearly extend in vehicle plan view. In the embodiment, the left connecting member 13L was curved in vehicle plan view. However, the present invention is not limited thereto. The left connecting member 13L may linearly extend in vehicle plan view.
(11) In the embodiment, the right connecting member 13R was curved in vehicle front view. However, the present invention is not limited thereto. The right connecting member 13R may linearly extend in vehicle front view. In the embodiment, the left connecting member 13L was curved in vehicle front view. However, the present invention is not limited thereto. The left connecting member 13L may linearly extend in vehicle front view.
(12) In the embodiment, the right connecting member 13R was curved. However, the present invention is not limited thereto. For example, the right connecting member 13R may linearly extend. For example, the right connecting member 13R may include a curved portion and a linear portion. In the embodiment, the left connecting member 13L was curved. However, the present invention is not limited thereto. For example, the left connecting member 13L may linearly extend. For example, the left connecting member 13L may include a curved portion and a linear portion.
(13) In the embodiment, the power unit 51 was attached to and detached from the straddled electric vehicle 1 in a state where the battery 41 was detached from the straddled electric vehicle 1. However, the present invention is not limited thereto. For example, the power unit 51 may be attached to and detached from the straddled electric vehicle 1 in a state where the battery 41 was mounted on the straddled electric vehicle 1. In the embodiment, after the battery 41 was detached from the straddled electric vehicle 1, the power unit 51 was detached from the straddled electric vehicle 1. However, the present invention is not limited thereto. For example, before the battery 41 is detached from the straddled electric vehicle 1, the power unit 51 may be detached from the straddled electric vehicle 1.
(14) In the embodiment, the entirety of the main frame 5 was composed of two frames (that is, the right main frame 5R and the left main frame 5L). However, the present invention is not limited thereto. For example, at least a part of the main frame 5 may be composed of one frame. For example, the main frame 5 may include a first portion composed of one frame and a second portion composed of two frames. For example, the first portion of the main frame 5 may be composed of any one of the right main frame 5R and the left main frame 5L. Alternatively, the first portion of the main frame 5 may be composed of the right main frame 5R and the left main frame 5L in contact with each other. For example, the second portion of the main frame 5 may be composed of the right main frame 5R and the left main frame 5L separated from each other. The first portion of the main frame 5 is located at the front part of the main frame 5, for example. The second portion of the main frame 5 is located at the rear part of the main frame 5, for example. In the present modified embodiment, the connecting member 13 may be connected to the first portion. Alternatively, the connecting member 13 may be connected to the second portion.
(15) In the embodiment, the number of front wheels 22 was one. However, the present invention is not limited thereto. The number of front wheels 22 may be two. In the embodiment, the number of rear wheels 32 was one. The present invention is not limited thereto. The number of rear wheels 32 may be two.
(16) In the embodiment, an off-road type vehicle as the straddled electric vehicle 1 has been exemplified. However, the present invention is not limited thereto. For example, the straddled electric vehicle 1 may be changed to vehicles of other types, such as a scooter-type, a street type, a sport type, or an all-terrain vehicle.
(17) In the embodiment and each modified embodiment described in the above (1) to (16), each configuration may be appropriately changed by further replacing or combining each configuration with another modified embodiment.

### Reference Signs List

- 1: straddled electric vehicle
- 3: vehicle body frame
- 4: head pipe
- 5: main frame
- 5R: right main frame
- 5L: left main frame
- 6: down frame
- 7: front portion
- 7C: central front portion
- 7R: right front portion
- 7L: left front portion
- 8: lower portion
- 8R: right lower portion
- 8L: left lower portion
- 10: pivot frame
- 11: pivot shaft portion
- 12: reinforcing frame
- 13: connecting member
- 13R: right connecting member (first connecting member or second connecting member)
- 13L: left connecting member (first connecting member or second connecting member)
- 14, 14R, 14L: first site
- 15, 15R, 15L: second site
- 16, 16R, 16L: third site
- 17, 17R, 17L: fastening member (first fastening site)
- 18, 18R, 18L: fastening member (second fastening site)
- 19, 19R, 19L: fastening member (third fastening site)
- 22: front wheel
- 33: rear wheel
- 41: battery
- 51: power unit
- 53: inverter
- 55: electric motor
- X: longitudinal direction of straddled electric vehicle
- Y: transverse direction of straddled electric vehicle
- Z: up-down direction of straddled electric vehicle

## Claims

1. A straddled electric vehicle comprising:
a main frame extending in a longitudinal direction of the straddled electric vehicle;
a down frame disposed below the main frame in side view of the straddled electric vehicle;
a power unit disposed below the main frame and above the down frame in the side view of the straddled electric vehicle; and
a first connecting member connected to the main frame and the down frame, wherein
the first connecting member overlaps the power unit in the side view of the straddled electric vehicle, and
the first connecting member is detachable from the main frame and the down frame.

2. The straddled electric vehicle according to claim 1, wherein
when the first connecting member is detached from the main frame and the down frame, the first connecting member allows the power unit to move in a transverse direction of the straddled electric vehicle with respect to the main frame and the down frame.

3. The straddled electric vehicle according to claim 1 or 2, wherein
the straddled electric vehicle comprises
a first fastening member that attaches and detaches the main frame and the first connecting member, and
a second fastening member that attaches and detaches the down frame and the first connecting member.

4. The straddled electric vehicle according to any one of claims 1 to 3, wherein
the main frame and the down frame surround the power unit in the side view of the straddled electric vehicle.

5. The straddled electric vehicle according to any one of claims 1 to 4, wherein
the down frame has
a front portion, and
a lower portion,
the front portion passes through a position in front of the power unit and extends from a position higher than the power unit to a position lower than the power unit,
the lower portion extends rearward from the front portion, and
the power unit is disposed above the lower portion.

6. The straddled electric vehicle according to any one of claims 1 to 5, wherein
the power unit includes
an inverter, and
an electric motor.

7. The straddled electric vehicle according to claim 6, wherein
the first connecting member overlaps the inverter in the side view of the straddled electric vehicle.

8. The straddled electric vehicle according to any one of claims 1 to 7, wherein
the first connecting member supports the power unit.

9. The straddled electric vehicle according to any one of claims 1 to 8, wherein
the first connecting member includes
a first site connected to the main frame,
a second site connected to the down frame, and
a third site connected to the power unit, and
the third site is disposed between the first site and the second site.

10. The straddled electric vehicle according to claim 9, wherein
the first connecting member passes through the third site and extends from the first site to the second site.

11. The straddled electric vehicle according to any one of claims 1 to 10, wherein
the first connecting member is disposed at one of a position rightward of the power unit and a position leftward of the power unit.

12. The straddled electric vehicle according to claim 11, wherein
the straddled electric vehicle comprises a second connecting member connected to the main frame and the down frame,
the second connecting member is disposed at the other of the position rightward of the power unit and the position leftward of the power unit, and
the second connecting member overlaps the power unit in the side view of the straddled electric vehicle.

13. The straddled electric vehicle according to claim 12, wherein
the second connecting member is detachable from the main frame and the down frame.

14. The straddled electric vehicle according to any one of claims 1 to 13, wherein
the straddled electric vehicle comprises a battery, and
the first connecting member overlaps the battery in the side view of the straddled electric vehicle.

15. The straddled electric vehicle according to claim 14, wherein
the battery is disposed above the power unit, and
the main frame includes
a right main frame disposed rightward of the battery, and
a left main frame disposed leftward of the battery.
